# EUROPÄISCHE PATENTSCHRIFT

(11) **EP 0 388 837 B1**
(45) Veröffentlichungstag und Bekanntmachung des Hinweises auf die Patenterteilung: **10.04.1996**
(21) Anmeldenummer: 90105115.1
(22) Anmeldetag: 19.03.1990
(51) Int. Cl.: C07F 15/02, C07F 19/00, C08F 4/42, C08G 59/68, C07C 43/10, C07D 323/00

(54) **Initiatoren für kationisch polymerisierbare Materialien**
Initiators for cationically polymerisable materials
Initiateurs pour les composés cationiquement polymérisables

(30) Priorität: 21.03.1989 CH 1037/89
(43) Veröffentlichungstag der Anmeldung: 26.09.1990
(73) Patentinhaber: CIBA-GEIGY AG, CH-4002 Basel (CH)
(72) Erfinder: Müller, Beat, Dr., CH-1723 Marly (CH); Baumann, Dieter, CH-4313 Möhlin (CH)
(74) Vertreter: Zumstein, Fritz, Dr.

(56) Entgegenhaltungen:
- EP-A- 0 051 946
- FR-A- 2 105 891
- FR-A- 2 289 238
- US-A- 4 508 646
- US-A- 4 740 577

## Beschreibung

Die vorliegende Erfindung betrifft neue Initiatorzusammensetzungen für kationisch polymerisierbare Materialien, ausgewählte neue Metallkomplexe, Verfahren zur Herstellung der Initiatorzusammensetzungen und der Metallkomplexe, kationisch polymerisierbare Materialien enthaltend diese Initiatorzusammensetzungen, ein Verfahren zur Herstellung gehärteter Produkte unter Verwendung der neuen Initiatorzusammensetzungen, sowie die gehärteten Produkte.

In den EP-A-94,915 und -109,851 werden härtbare Zusammensetzungen beschrieben, die kationisch polymerisierbare Materialien, bevorzugt Epoxidharze, und als Härter Metallocensalze enthalten.

Bei diesen vorbekannten Zusammensetzungen werden die metallorganischen Komplexsalze im allgemeinen nach dem Einmischen in das zu polymerisierende Material vor einer thermischen Härtung durch Bestrahlen mit aktinischer Strahlung aktiviert, wobei je nach Material und Bestrahlungsbedingungen eine teilweise Polymerisation ablaufen kann, und anschliessend thermisch gehärtet, oder sie werden direkt bei hohen Temperaturen thermisch gehärtet, in der Regel nahe des Zersetzungspunktes des Komplexsalzes.

Für eine Reihe von Anwendungen, wie beispielsweise beim Einsatz in Umhüllungsprozessen bei der Herstellung von integrierten Schaltungen oder als rasch härtende Einkomponentenkleber sind härtbare Zusammensetzungen erwünscht, die von an sich gegenläufigen und daher schwierig zu realisierenden Eigenschaften, wie ausreichender Verarbeitungsstabilität der ungehärteten Zusammensetzung (pot life) und einer möglichst raschen Härtungsgeschwindigkeit bei möglichst niedrigen Temperaturen, miteinander vereinen.

Rasch härtbare Enkapsuliersysteme auf Epoxidbasis sind aus der EP-A-235,077 bekannt. Diese Systeme enthalten ausgewählte Diglycidylether, Härtungskatalysatoren, sterisch gehinderte Phenole oder Phosphite und bestimmte Reaktivverdünner. Als Härtungskatalysator wird ein Zinktetrafluoroboratkomplex beschrieben, der Wasser und Tetrahydrofuran als Liganden enthält. Die Konzentration des Härters muss im allgemeinen genau eingestellt werden, um eine ausreichende Verarbeitungsstabilität kombiniert mit einer hohen Härtungsgeschwindigkeit zu erzielen.

Es wurden jetzt Initiatoren für kationisch polymerisierbare Verbindungen gefunden, die mit einem reaktiven Verdünnungsmittel kombiniert eingesetzt werden, wodurch eine Steuerung der Initiatoraktivität möglich ist. Solche Initiatorsysteme sind auf einfache Art und Weise zu verarbeiten und führen darüber hinaus zu vernetzten Produkten mit vorteilhaften Endeigenschaften.

Insbesondere ist die hohe Temperaturstabilität des gehärteten Produktes als überraschend anzusehen. Ausserdem zeichnen sich die mit diesen Initiatorzusammensetzungen gehärten Produkte durch eine gute Farbstabilität und durch eine unerwartet feste Bindung der Initiatorbestandteile an das gehärtete Harz und somit durch eine geringe Korrosion aus. So werden Ionen des Initiators im "Pressure Cooker Test" nicht aus dem Harz ausgewaschen (20 g pulverisierte Probe werden zusammen mit 100 ml deionisiertem Wasser 20 Stunden lang bei 121°C/1,2 bar gekocht; dann wird die elektrische Leitfähigkeit des Wassers bestimmt). Ein weiterer Vorteil der erfindungsgemässen Initiatorzusammensetzungen sind die hohen Durchsätze, die sich insbesondere bei maschineller Verarbeitung erzielen lassen, da eine rasche Gelierung bei tiefen Temperaturen möglich ist und da auch die Nachhärtzeiten bei höherer Temperatur kurz gehalten werden können. Ferner bleibt die Initiatorwirkung nach einer Unterbrechung des Härtungsvorganges erhalten, so dass die Härtungsreaktion bei erneutem Aufheizen wieder anspringt. Als weiterer Vorteil bei der Verarbeitung der erfindungsgemässen härtbaren Zusammensetzungen ist anzusehen, dass das Mischungsverhältnis der Harz- und Härterkomponenten im allgemeinen nicht kritisch für die Härtungsbedingungen ist. So kann dieses Mischungsverhältnis insbesondere bei der maschinellen Verarbeitung variiert werden, ohne dass dadurch jedes Mal die Härtungsbedingungen angepasst werden müssen.

Ferner kann bei den neuen Initiatorzusammensetzungen eine Aktivierung der härtbaren Zusammensetzungen durch Bestrahlen vor dem Härtungsschritt entfallen, so dass sich generell eine Vereinfachung bei der Verarbeitung ergibt, insbesondere bei Systemen mit hohem Füllstoffanteil oder bei der Härtung in dicken Schichten, bei denen eine vollständige Bestrahlung der gesamten härtbaren Zusammensetzung problematisch sein kann.

Die vorliegende Erfindung betrifft Stoffzusammensetzungen, enthaltend
i) ein Anhydrid einer Polycarbonsäure, ein Polyisocyanat, ein cyclisches Carbonat, ein Lacton oder ein Gemisch solcher Verbindungen, und darin gelöst
ii) mindestens eine Verbindung der Formel I

   [M⁺ⁿ(L)ₓ]ⁿ⁺ n X⁻ (I),

   worin n 2 oder 3 ist, M ein Metallkation ausgewählt aus der Gruppe bestehend aus Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ und Co³⁺ darstellt, X⁻ ein Anion ist, das ausgewählt wird aus der Gruppe bestehend aus AsF₆⁻, SbF₆⁻, BiF₆⁻ und aus von diesen Anionen abgeleiteten Derivaten, worin ein Fluoratom durch Hydroxylgruppen ersetzt ist, oder worin bis zu 50 % der Anionen X⁻, bezogen auf die Gesamtmenge der Anionen, auch beliebige Anionen sein können, L ein organischer σ-Donorligand ist, der als Ligandenstellen ein oder mehrere funktionelle Reste ausgewählt aus der Gruppe bestehend aus -CO-, -CO-O-, -O-CO-O- oder -O- aufweist, und der über das Sauerstoffatom oder über die Sauerstoffatome mit dem Zentralatom σ-Bindungen ausbildet und x eine ganze Zahl von 0 bis 6 bedeutet, wobei die Liganden L im Rahmen der gegebenen Definitionen unterschiedlich sein können.

Der Ausdruck "bis zu 50 % der Anionen X⁻ können auch beliebige Anionen sein" ist so zu verstehen, dass in Verbindungen der Formel I etwa die Hälfte der gesamthaft vorhandenen Anionen eine beliebige Bedeutung besitzen kann. Der mögliche Anteil der von AsF₆⁻, SbF₆⁻, BiF₆⁻ oder von deren hydroxylgruppenhaltigen Derivaten abweichenden Anionen wird von der gewünschten Aktivität der Initiatorzusammensetzungen abhängen. Eine Verbindung der Formel I mit von AsF₆⁻, SbF₆⁻, BiF₆⁻ oder mit von deren hydroxylgruppenhaltigen Derivaten abweichenden Anionen wird für die Zwecke der vorliegenden Erfindung als brauchbar angesehen, wenn sie in Kombination mit Komponente i) ein kationisch polymerisierbares Material zu härten vermag. Dies kann vom Fachmann durch Routineuntersuchungen festgestellt werden.

Der Begriff "organischer σ-Donorligand" ist so zu verstehen, dass es sich bei L um irgendeinen σ-Donorligand handeln, der über ein Sauerstoffatom der oben definierten funktionellen Gruppen eine Metall-Ligand σ-Bindung ausbildet. Der Begriff "σ-Donorligand" ist dabei im weitesten Sinne zu verstehen, wie beispielsweise in R.P. Houghton, Metal Complexes In Organic Chemistry, S. 4, Cambridge University Press, 1979, definiert. Es kann sich dabei also uni reine σ-Donoren, um σ- und π-Donoren oder um σ-Donoren und π-Acceptoren handeln.

Die Grösse des Indexes x beschreibt die Zahl der Liganden L. Diese Zahl ist im allgemeinen davon abhängig inwieweit das Zentralatom M⁺ⁿ koordinativ abgesättigt ist und wieviel Ligandenstellen ein bestimmter Ligand aufweist. Für die Zwecke der vorliegenden Erfindung sind Verbindungen der Formel I einsetzbar, deren Zentralatom nicht, teilweise oder vollständig koordinativ abgesättigt ist. Die Zahl der Liganden L kann zwischen null und sechs betragen. Für den Fall, dass die Verbindung der Formel I Liganden L aufweist und das Zentralatom koordinativ abgesättigt ist, nimmt x in Abhängigkeit von der Zahl der Ligandenstellen in L einen solchen Wert an, dass das Zentralatom mit acht oder insbesondere mit sechs Sauerstoffatomen der Ligandenstellen des oder der Liganden L komplexiert wird. Bei ausgewählten Liganden können auch mehr als acht Sauerstoffatome das Zentralatom komplexieren. Handelt es sich bei L also um einzähnige Liganden, so ist x im allgemeinen sechs, bei zweizähnigen Liganden ist x im allgemeinen drei bei dreizähnigen Liganden ist x im allgemeinen zwei und bei vier- oder höherzähnigen Liganden ist x im allgemeinen eins oder zwei.

Beispiele für mögliche Ligandentypen L sind Alkohole einschliesslich der Phenole, Wasser, Ether, Aldehyde, Ketone, Ketene, Acetale, Acylale, Acyloine, Carbonsäuren oder funktionelle Derivate von Carbonsäuren, beispielsweise deren Ester oder Anhydride einschliesslich der Lactone und cyclischen Carbonate, sowie Hydroxycarbonsäuren und Oxocarbonsäuren und deren Ester und Anhydride.

Von diesen Liganden sind Ether, Ketone, Carbonsäureanhydride und Carbonsäureester, insbesondere die Lactone und Anhydride von Dicarbonsäuren, besonders bevorzugt.

Bei den Carbonsäure-, Anhydrid- oder Esterliganden L, handelt es sich ganz allgemein um aliphatische, cycloaliphatische, aromatische oder araliphatische Verbindungen mit einer oder mit mehr als einer Carboxylgruppe in, Molekül.

Die bevorzugte Zahl von Kohlenstoffatomen beträgt bei den aliphatischen Carbonsäuren 2 bis 40 und bei den cycloaliphatischen, aromatischen und araliphatischen Carbonsäuren 7 bis 12.

Beispiele für Verbindungen mit einer Carboxylgruppe im Molekül sind gesättigte und ungesättigte aliphatische Monocarbonsäuren, wie Essigsäure, Propionsäure, Buttersäure, Valeriansäure, Isovaleriansäure, Pivalinsäure, Capronsäure, Laurinsäure, Myristinsäure, Palmitinsäure, Stearinsäure, Arachinsäure oder Acrylsäure, Methacrylsäure, Propiolsäure, Crotonsäure, Isocrotonsäure, Tetrolsäure, Sorbinsäure oder Oelsäure; oder cycloaliphatische Monocarbonsäuren, wie Cyclohexancarbonsäure; oder aromatische Monocarbonsäuren, wie Benzoesäure, Naphthoesäuren oder Tolylsäuren; oder araliphatische Monocarbonsäuren, wie Hydrotropasäure, Atropasäure oder Zimtsäure.

Beispiele für Verbindungen mit mehr als einer Carboxylgruppe im Molekül sind gesättigte aliphatische Dicarbonsäuren, wie Oxalsäure, Malonsäure, Bernsteinsäure, α-Methylbernsteinsäure, Glutarsäure, Adipinsäure, Pimelinsäure, Korksäure, Azelainsäure, Sebazinsäure oder dimerisierte Linolsäure; oder ungesättigte aliphatische Dicarbonsäuren, wie Maleinsäure, Fumarsäure, Mesaconsäure, Citraconsäure, Glutaconsäure oder Itaconsäure; oder cycloaliphatische Dicarbonsäuren, wie Camphersäure, Hexahydrophthal-, Hexahydroisophthal- oder Hexahydroterephthalsäure, oder Tetrahydrophthal-, Tetrahydroisophthal- oder Tetrahydroterephthalsäure, oder 4- Methyltetrahydrophthalsäure, 4-Methylhexahydrophthalsäure oder Endomethylentetrahydrophthalsäure; oder aromatische Dicarbonsäuren, wie Phthal-, Isophthal- oder Terephthalsäure; oder Tri- und höhere Carbonsäuren, wie aromatische Tri- oder Tetracarbonsäuren, beispielsweise Trimellitsäure, Trimesinsäure, Pyromellithsäure oder Benzophenontetracarbonsäure.

Die Anhydride weisen in der Regel ein oder zwei Anhydridgruppen im Molekül auf. Dabei kann es sich um intramolekulare Anhydride oder um intermolekulare Anhydride handeln. Bei den intermolekularen Anhydriden kann es sich um Anhydride einer oder verschiedener Carbonsäuren handeln. Beispiele für solche Liganden sind die Anhydride der oben aufgezählten Carbonsäuren.

Handelt es sich bei L um einen Ester, so leitet sich dieser im allgemeinen von einer aliphatischen, cycloaliphatischen, aromatischen oder araliphatischen Mono- oder Polycarbonsäure ab, die in der Regel mit einem einwertigen aliphatischen, cycloaliphatischen, aromatischen oder araliphatischen Alkohol verestert ist.

Geeignete Mono- oder Polycarbonsäuren zur Herstellung dieser Ester sind weiter oben aufgezählt.

Beispiele für Alkohole, die als Liganden L oder zur Veresterung eingesetzt werden können, sind einwertige aliphatische Alkohole mit 1 bis 20 Kohlenstoffatomen, wie Methanol, Ethanol, n-Propanol, Isopropanol, Butanol, Pentanol, Hexanol, Octanol, Decanol, Dodecanol, Tetradecanol, Hexadecanol, Octadecanol oder Eicosanol, einwertige cycloaliphatische Alkohole mit 5 bis 12 Kohlenstoffatomen, wie Cyclopentanol oder Cyclohexanol, einwertige Phenole mit 6 bis 14 Kohlenstoffatomen, wie Phenol, Kresole oder Naphthole.

Zu den Estern zählen insbesondere auch actone insbesondere Lactone, von aliphatischen Hydroxycarbonsäuren, wie γ-Butyrolacton, γ-Valerolacton, δ-Valerolacton, ε-Caprolacton oder Crotonolacton oder auch cyclische Carbonate. Handelt es sich bei L um ein cyclisches Carbonat, so ist darunter im allgemeinen eine aliphatische Verbindung mit einer Carbonatgruppe zu verstehen. Die bevorzugte Zahl von Kohlenstoffatomen beträgt 5 bis 12. Ein Beispiel für solche Liganden L ist γ-Propylencarbonat.

Handelt es sich bei L um einen Ether, so leitet sich dieser im allgemeinen von einem ein- bis vierwertigen aliphatischen, cycloaliphatischen, aromatischen oder araliphatischen Alkohol ab. Solche Ether können freie Hydroxylgruppen aufweisen. Die Ethergruppe kann ein Teil einer Kohlenstoffkette sein oder sie ist Teil eines Ringsystems.

Liganden L mit Ethergruppen als Teil einer Kohlenstoffkette leiten sich beispielsweise von einwertigen Alkoholen ab. Solche Alkohole sind beispielsweise weiter oben als Veresterungskomponente der Esterliganden L aufgezählt.

Beispiele für Liganden L mit Ethergruppen als Teil einer Kohlenstoffkette auf Basis mehrwertiger Alkohole sind die Polyalkylether, insbesondere die Di-, Tri- oder Tetramethyl-, -ethyl-, -propyl- oder -butylether von aliphatischen Di-, Tri- oder Tetraolen, wie Ethylenglykol, Diethylenglykol und höheren Poly-(oxyethylen)-glykolen, Propan-1,2-diol, Propan-1,3-diol oder höheren Poly-(oxypropylen)-glykolen, Butan-1,4-diol oder höheren Poly-(oxybutylen)-glykolen, Pentan-1,5-diol, Neopentylglykol (2,2- Dimethylpropandiol), Hexan-1,6-diol, Octan-1,8-diol, Decan-1,10-diol, Dodecan-1,12-diol, Hexan-2,4,6-triol, Glycerin, 1,1,1- Trimethylolethan, 1,1,1-Trimethylolpropan oder Pentaerithrit; oder die Dimethyl-, -ethyl-, -propyl- oder -butylether von cycloaliphatischen Diolen, wie von 1,3- oder 1,4-Dihydroxycyclohexan, 1,4-Cyclohexandimethanol, Bis-(4-hydroxycyclohexyl)-methan, 2,2-Bis-(4-hydroxycyclohexyl)-propan oder 1,1-Bis-(hydroxy-methyl)-cyclohex-3-en; oder die Di-, Tri- oder Tetramethyl-, -ethyl-, -propyl- oder -butylether von Di-, Tri- oder Tetraphenolen oder ein- oder mehrkernige Polyphenolen, wie von Resorcin, Hydrochinon, Bis-(4-hydroxyphenyl)-methan, 2,2-Bis-(4-hydroxyphenyl)-propan, Bis-(4-hydroxyphenyl)-ether, Bis-(4-hydroxyphenyl)-sulfon, 1,3,5-Trihydroxybenzol oder 1,1,2,2-Tetrakis-(4-hydroxyphenyl)-ethan. Diese mehrwertigen Alkohole oder Phenole können auch selbst als Liganden L eingesetzt werden.

Liganden L mit Ethergruppen als Teil eines Kingsystems leiten sich von mehrwertigen Alkoholen, insbesondere von Diolen, ab. Beispiele für solche Liganden sind Tetrahydrofuran, Dioxan oder Kronenether, wie 18-Krone-6, 15-Krone-5 oder 12-Krone-4.

Bevorzugte Etherliganden weisen zwei oder insbesondere eine Ethergruppe im Molekül auf. Besonders bevorzugt sind cyclische Etherliganden.

Ist L ein Aldehyd, so handelt es sich dabei um eine aliphatische, cycloaliphatische, aromatische oder araliphatische Verbindung mit vorzugsweise ein oder zwei Aldehydgruppen im Molekül. Beispiele dafür sind Aldehyde der weiter oben aufgezählten Carbonsäuren.

Ist L ein Keton, so handelt es sich dabei um eine aliphatische, cycloaliphatische, aromatische oder araliphatische Verbindung mit vorzugsweise ein oder zwei Ketogruppen im Molekül. Die Ketongruppe kann ein Teil einer Kohlenstoffkette sein oder sie ist Teil eines Ringsystems. Der Begriff "Keton" umfasst auch Chinone.

Beispiele für aliphatische Ketone sind Aceton, Methylethylketon, Ethylpropylketon, Diisopropylketon oder Hexan-2,4-dion.

Beispiele für cycloaliphatische Ketone sind 1,4-Benzochinon, Cyclopentanon oder Cyclohexanon.

Beispiele für aromatische Ketone sind 1,4-Naphthochinon, Anthrachinon oder Benzophenon.

Beispiele für araliphatische Ketone sind Acetophenon, Propiophenon, Chalcon oder Desoxybenzoin.

Es sind auch Liganden L möglich, die mehrere unterschiedliche Ligandenstellen in einem Molekül besitzen. Ein Beispiel dafür ist 2-Methoxyethanol.

Besitzt ein Teil der Anionen X⁻ in einer Verbindung der Formel I eine beliebige Bedeutung, so kann es sich dabei beispielsweise um Sulfat-, Phosphat-, Halogenid-, Carboxylat- oder Sulfonatanionen handeln. Vorzugsweise handelt es sich dabei um Chlorid oder Fluorid.

Zu den bevorzugten Komponenten ii) zählen Verbindungen der Formel II

[(L¹)ₐM⁺ⁿ]ⁿ⁺ n X⁻ (II),

worin M, X und n die oben definierten Bedeutungen besitzen, L¹ ein ein- bis drei- oder sechszähniger σ-Donorligand ist und eine aliphatische, cycloaliphatische, aromatische oder araliphatische Verbindung mit ein oder zwei Keton-, Anhydrid-, Carbonat- oder Estergruppen oder mit ein bis sechs Ethergruppen pro Molekül bedeutet, wobei die Liganden L¹ einer Verbindung der Formel II im Rahmen der gegebenen Definitionen unterschiedlich sein können und, falls L¹ ein einzähniger Ligand ist, a 6 bedeutet, falls L¹ ein zweizähniger Ligand ist, a 3 bedeutet, falls L¹ ein dreizähniger Ligand ist, a 2 bedeutet und, falls L¹ ein sechszähniger Ligand ist, a 1 bedeutet.

Komponente i) der erfindungsgemässen Initiatorzusammensetzungen ist ein Anhydrid einer Polycarbonsäure, ein Polyisocyanat, ein cyclisches Carbonat oder ein Lacton. Beispiele für Anhydride einer Polycarbonsäure, cyclische Carbonate oder Lactone sind weiter oben als mögliche Liganden L aufgezählt.

Handelt es sich bei Komponente i) um ein Polyisocyanat, so lässt sich im allgemeinen jede aliphatische, cycloaliphatische, aromatische oder araliphatische Verbindung mit mindestens zwei Isocyanatgruppen oder blockierten und durch Erhitzen deblockierbaren Isocyanatgruppen verwenden, in dem Komponente ii) gelöst werden kann.

Bevorzugte Polyisocyanate besitzen drei oder insbesondere zwei Isocyanatgruppen und weisen 6 bis 20 Kohlenstoffatome auf. Ganz besonders bevorzugt werden aromatische Diisocyanate, insbesondere 4,4′-Diisocyanatodiphenylmethan sowie technische Gemische verschiedener Diisocyanatodiphenylmethane.

Als Komponenten i) werden Polyisocyanate besonders bevorzugt, da sich mit solchen Initiatorzusammensetzungen in der Regel gehärtete Produkte mit besonders hohen Glasumwandlungstemperaturen herstellen lassen.

Beispiele für bevorzugte Polyisocyanate sind 2,4-Diisocyanatotoluol sowie dessen technische Gemische mit 2,6-Diisocyanatotoluol, 2,6- Diisocyanatotoluol, 1,5-Diisocyanatonaphthalin, 4,4′- Diisocyanatodiphenylmethan sowie technische Gemische verschiedener Diisocyanatodiphenylmethane (beispielsweise der 4,4′- und der 2,4′-Isomeren), urethanisiertes 4,4′-Diisocyanatodiphenylmethan, carbodiimidisiertes 4,4′-Diisocyanatodiphenylmethan, das Urethdion des 2,4-Diisocyanatotoluols, Triisocyanatotriphenylmethan, das Addukt aus Diisocyanatotoluol und Tiimethylolpropan, des Trimerisat aus Diisocyanatotoluol, Diisocyanato-m-xylylen, N,N′-Di-(4-methyl-3-isocyanatophenyl)-harnstoff, Mischtrimerisationsprodukte von Diisocyanatotoluol und 1,6- Diisocyanatohexamethylen, 1,6-Diisocyanatohexan, 3,5,5- Trimethyl-1-isocyanatomethylcyclohexan (Isophorondiisocyanat), N,N′,N˝-Tri-(6-isocyanatohexyl)-biuret, 2,2,4- Trimethyl-1,6-diisocyanatohexan, 1-Methyl-2,4-diisocyanatocyclohexan, Dimeryldiisocyanat, 4,4′- Diisocyanatodicyclohexylmethan, trimeres Isophorondiisocyanat, trimeres Hexandiisocyanat und 2,6-Diisocyanatohexansäuremethylester.

Bevorzugte Komponenten i) sind Anhydride von Polycarbonsäuren, besonders solche Anhydride, die als Epoxidhärter an sich bekannt sind. Besonders bevorzugt verwendet man Anhydride von Dicarbonsäuren. Beispiele für solche bevorzugten Komponenten i) sind Tetrahydrophthalsäureanhydrid, Methyl-tetrahydrophthalsäureanhydrid, Hexahydrophthalsäureanhydrid und insbesondere Methyl-hexahydrophthalsäureanhydrid.

Die Menge an Verbindung der Formel I wird im allgemeinen so gewählt, dass sich in Kombination mit einem härtbaren Material eine für den jeweiligen Verwendungszweck ausreichende Verarbeitungsstabilität und Härtungsgeschwindigkeit ergibt. Die im Einzelfall benötigte Menge kann anhand von einfachen Versuchen ermittelt werden. Im allgemeinen bewegt sich die Menge an Komponente ii) zwischen 0,05 und 10 Gew.%, bezogen auf das Gesamtgewicht der Komponenten i) und ii).

Die Verbindungen der Formel II sind ebenfalls ein Gegenstand der vorliegenden Erfindung.

Der Index n ist vorzugsweise 2.

Bevorzugt sind Initiatorzusammensetzungen aus Verbindungen der Formel II, worin a 6 oder 3 ist, oder diese Verbindungen.

M ist vorzugsweise ein Metallkation ausgewählt aus der Gruppe bestehend aus Fe²⁺, Zn²⁺, Mg²⁺, Co²⁺, Mn²⁺, Sn²⁺ und Al³⁺.

Ganz besonders bevorzugt ist M ein Metallkation ausgewählt aus der Gruppe bestehend aus Zn²⁺, Mn²⁺, Sn²⁺, Al³⁺ und insbesondere Fe²⁺.

Bevorzugt verwendet man zur Herstellung der erfindungsgemässen Initiatorzusammensetzungen Verbindungen der Formel I oder II, worin alle Anionen X⁻ ausgewählt sind aus der Gruppe bestehend aus AsF₆⁻, SbF₆⁻,SbF₅(OH)⁻ und BiF₆⁻. Bevorzugtes Anion X⁻ ist SbF₆⁻.

Bevorzugte Initiatorzusammensetzungen sind bei Temperaturen unterhalb von 50°C, insbesondere unterhalb von 30°C, flüssig, um ein Einarbeiten in das kationisch polymerisierbare Material zu erleichtern.

Besonders bevorzugte Initiatorzusammensetzungen enthalten als Komponente i) Anhydride von Polycarbonsäuren, insbesondere Dianhydride von Polycarbonsäuren.

Obgleich die Zusammensetzung der erfindungsgemässen Initiatorzusammensetzungen im einzelnen nicht bekannt ist, wird angenommen, dass der Ligand L in Komponente ii) beim Lösen in Komponente i) gegen diese im Ueberschuss vorliegende Komponente, insbesondere gegen Anhydridliganden, ausgetauscht wird.

Besonders bevorzugt sind daher die Anhydridkomplexe der Formel I und ganz besonders die Verbindungen der Formel II, worin a 6 oder 3 ist und L¹ eine aliphatische, cycloaliphatische, aromatische oder araliphatische Verbindung mit einer oder zwei Carbonsäureanhydridgruppen ist.

Als Komponente i) werden insbesondere Verbindungen bevorzugt, die bei Temperaturen unterhalb von 50°C, insbesondere unterhalb von 30°C, flüssig sind. Dabei kann es sich auch um flüssige Gemische solcher Verbindungen handeln.

Die erfindungsgemässen Zusammensetzungen lassen sich durch Lösen von Verbindungen Formel I in einer Komponente i) gemäss den obigen Definitionen herstellen.

Die Verbindungen der Formel I oder II lassen sich im allgemeinen durch verschiedene Verfahren a) bis e) erhalten.

Die Verbindungen der Formel II, worin M Fe²⁺ ist, lassen sich beispielsweise nach Verfahren a) erhalten. Dazu wird ein π-Komplex der Formel III

[(R¹)Fe⁺²(R²)]^{+b} b X⁻ (III),

worin R¹ ein π-Aren bedeutet und R² ein Anion eines π-Arens, beispielsweise ein Cyclopentadienylanion, oder insbesondere ein π-Aren ist, b 1 oder 2 bedeutet, und X⁻ die oben definierte Bedeutung aufweist in einem einzuführenden Liganden L¹ mit der oben definierten Bedeutung, oder in einem Gemisch dieser Verbindungen gelöst und mit aktinischer Strahlung bestrahlt oder erhitzt, bis der Ligandenaustausch von R¹ und R² gegen L¹ im wesentlichen stattgefunden hat und anschliessend in an sich bekannter Weise aus dem Reaktionsgemisch abgetrennt.

Die Umsetzung der Verbindung der Formel III kann anhand chromatographischer oder spektroskopischer Methoden in an sich bekannter Weise verfolgt werden, beispielsweise durch das Verfolgen der Intensität einer für den Ausgangskomplex der Formel III charakteristischen Absorptionsbande.

Die Mengen an Ausgangsprodukt der Formel III und an einzuführendem Liganden L¹ werden im allgemeinen so gewählt, dass auf ein Mol Verbindung der Formel III vorzugsweise zehn bis einhundert Mol der Verbindung L entfallen.

Die Umsetzung kann, in Abhängigkeit von der Stabilität des Ausgangskomplexes, durch Erhitzen durchgeführt werden. Die Umsetzung kann jedoch auch durch Bestrahlung des Ausgangskomplexes der Formel III mit aktinischer Strahlung durchgeführt werden, wobei man eine Wellenlänge verwendet, bei welcher der Ausgangskomplex absorbiert.

Das Produkt der Formel II kristallisiert im allgemeinen während der Bestrahlung oder beim Abkühlen im Reaktionsgemisch aus oder kann durch Zugabe eines Nichtlösungsmittels für das Produkt aus dem Reaktionsgemisch ausgefällt werden. Das Produkt wird anschliessend mittels Routineoperationen, wie Filtration oder Extraktion, aus dem Gemisch entfernt werden.

Die Ausgangsverbindungen der Formel III sind an sich bekannt und beispielsweise in der EP-A-94,915 beschrieben.

Zur Durchführung von Verfahren b) wird ein Metallhalogenid der Formel IV zusammen mit einer etwa stöchiometrischen Menge eines Silbersalzes der Formel V

M⁺ⁿ(Hal)ₙ (IV),

AgX (V),

worin n, M und X die oben definierte Bedeutung aufweisen und Hal ein Halogenidanion, insbesondere Chlorid oder Fluorid ist, in einem einzuführenden Liganden L¹ mit der oben definierten Bedeutung, oder in einem Gemisch dieser Verbindungen gelöst oder suspendiert und die Reaktionsmischung gegebenenfalls erhitzt, so dass das Produkt der Formel II entsteht.

Die Mengen an Ausgangsprodukten der Formeln IV und V und an einzuführendem Liganden L¹ werden im allgemeinen so gewählt, dass auf ein Mol Verbindung der Formel IV etwa n Mol der Verbindung der Formel V und etwa zehn bis einhundert Mol, der Verbindung L¹ entfallen.

Die Umsetzung erfolgt im allgemeinen bei niedriger Temperatur, beispielsweise bei 20-40°C. Das Produkt kann hier ebenfalls mittels Routineoperationen aus dem Reaktionsgemisch abgetrennt werden, beispielsweise durch Abfiltrieren des gebildeten Silberhalogenids und Isolierung des gebildeten Produktes wie unter Verfahren a) beschrieben.

Zur Durchführung von Verfahren c) wird ein Metallsalz Formel VI mit einer Verbindung der Formel VII

M⁺ⁿ(Y⁻)ₙ (VI),

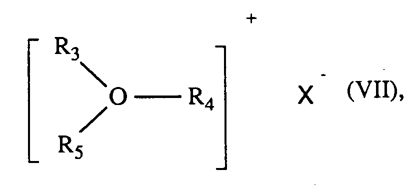

worin R₃, R₄ und R₅ unabhängig voneinander Alkyl, Cycloalkyl oder Aralkyl, insbesondere Methyl oder Ethyl, bedeuten M, n, X⁻ die oben definierte Bedeutung besitzen, und Y⁻ ein Halogenidanion, Alkoholatanion oder Carbonsäureanion bedeutet, zusammen mit einer Verbindung L¹ gemäss der obigen Definition umgesetzt, so dass das Produkt der Formel II entsteht.

Die Mengen an Ausgangsprodukten der Formeln VI und VII und an einzuführendem Liganden L¹ werden im allgemeinen so gewählt, dass auf ein Mol Verbindung der Formel VI etwa n Mol der Verbindung der Formel VII und vorzugsweise zehn bis einhundert Mol, der Verbindung L¹ entfallen.

Die Umsetzung erfolgt bei Raumtemperatur oder unter Erhitzen, beispielsweise in einem Temperaturintervall von 20-100°C. Das Produkt kann hier ebenfalls mittels Routineoperationen aus dem Reaktionsgemisch abgetrennt werden, beispielsweise wie bei Reaktion a) beschrieben.

Die Verbindungen der Formel VII sind an sich bekannt und beispielsweise in der US-A-3,585,227 oder in J.Chem.Soc., Chem.Communications, **1976**, S. 33-4 beschrieben.

Zur Durchführung von Verfahren d) wird eine Verbindung der der Formel VIII mit einer Lewis-Säure der Formel IX

M⁺ⁿFₙ (VIII),

QF₅ (IX),

worin n und M die oben definierte Bedeutung aufweisen und Q As, Sb oder Bi bedeutet, umgesetzt. Dazu kann die Verbindung der Formel VIII in einem Ueberschuss der Verbindung der Formel IX gelöst werden oder die Umsetzung wird in einem Lösungsmittel vorgenommen, das unter den Reaktionsbedingungen inert ist und wenigstens eine der Verbindungen der Formel VIII oder IX zu lösen vermag. Beispiele für geeignete Lösungsmittel sind flüssiges SO₂ oder wasserfreies HF. Das Reaktionsprodukt kristallisiert im allgemeinen aus der Reaktionslösung aus und kann anhand von Routineverfahren, wie Filtration, aus dem Gemisch abgetrennt werden.

Das erhaltene Produkt kann als solches zur Herstellung der erfindungsgemässen Initiatorzusammensetzungen eingesetzt werden, indem es in einer Komponente i) gemäss der obigen Definition gelöst wird oder das Produkt wird in einem einzuführenden Liganden L der oben definierten Bedeutung oder in einem Gemisch dieser Liganden gelöst und die Reaktionsmischung gegebenenfalls erhitzt, so dass der Ligand L in die Verbindung der Formel I eingeführt wird. Das Produkt kann dann auf die gleiche Weise, wie bei Verfahren a) beschrieben, isoliert und gereinigt werden.

Umsetzungen von Verbindungen VIII und IX sind von D. Gantar et al. in J. Chem. Soc., Dalton Transactions, **1987**, S. 2379-83 beschrieben.

Die Mengen an Ausgangsprodukten der Formeln VIII und IX und an einzuführendem Liganden L werden im allgemeinen so gewählt, dass auf ein Mol Verbindung der Formel VII etwa n Mole der Verbindung der Formel IX und vorzugsweise zehn bis einhundert Mol der Verbindung L entfallen. Die Umsetzung erfolgt bei Raumtemperatur oder unter Erhitzen, beispielsweise in einem Temperaturintervall von 20-200°C.

Besonders bevorzugt wird die Variante des Verfahrens d) zur Herstellung der erfindungsgemässen Initiatorzusammensetzungen, worin das Umsetzungprodukt der Verbindungen VIII und IX nach dessen Isolierung direkt in Komponente i) gelöst wird.

Die Verbindungen der Formel II, lassen sich gemäss Verfahren e) auch durch Ligandenaustausch in andere Verbindungen der Formel II umwandeln. Dazu wird eine Verbindung der Formel IIa

[(L³)ₐM⁺ⁿ]ⁿ⁺ n X⁻ (IIa),

worin M, X, n und a die oben definierte Bedeutung besitzen und L³ eine der weiter oben für L¹ definierte Bedeutung besitzt zusammen mit einer mindestens der Stöchiometrie des gewünschten Endproduktes entsprechenden Menge eines von L³ unterschiedlichen Liganden L¹ gelöst, zur Durchführung des Ligandenaustauschs erhitzt und das Produkt der Formel II, worin alle oder ein Teil der ursprünglichen Liganden L³ durch den neu eingeführten Liganden L¹ ersetzt sind, auf die unter Verfahren a) beschriebene Weise isoliert und aufgearbeitet wird.

Die Mengen an Ausgangsprodukt der Formel IIa und an einzuführendem Liganden L¹ werden gemäss der Stöchiometrie des gewünschten Produktes ausgewählt. Soll beispielsweise nur ein Teil der Liganden L³ im Ausgangsprodukt ausgetauscht werden, so wird eine unterstöchiometrischen Menge an einzuführendem Liganden L¹ verwendet. Diese Menge ist im allgemeinen auch abhängig von der Grösse der Komplexbildungskonstante des Produktes und kann vom Fachmann anhand von Routineverfahren ermittelt werden.

Sollen alle Liganden L³ im Ausgangsprodukt der Formel IIa ausgetauscht werden, so wird der einzuführende Ligand L¹in der Regel in stöchiometrischer Menge oder in stöchiometrischem Ueberschuss vorgelegt. Auch hier ist die Menge an L¹ im allgemeinen auch abhängig von der Grösse der Komplexbildungskonstante des Produktes und wird vom Fachmann anhand von Routineverfahren ermittelt. Vorzugsweise setzt man pro Mol der Verbindung IIa etwa zehn bis einhundert Mol, des Liganden L¹ ein.

Die Verfahren a) bis e) sind ebenfalls Gegenstand der vorliegenden Erfindung.

Die Verbindungen der Formeln I und II sind im allgemeinen hygroskopisch.

Die Verbindungen der Formel I mit einem nicht oder nur teilweise koordinativ abgesättigten Zentralatom M lassen sich in der Regel aus den koordinativ abgesättigten Verbindungen durch Erhitzen erhalten. Dabei wird der Ligand L abdestilliert und man erhält so die Verbindung mit dem nicht oder nur teilweise komplexierten Zentralatom.

Die Verbindungen der Formel I zeichnen sich durch eine hohe Reaktivität aus, weshalb sie im allgemeinen in Verdünnung mit einer Komponente i) gemäss der obigen Definition verwendet. Mit der Variation der Menge an Verbindungen der Formel I lässt sich die jeweils gewünschte Reaktivität der Initiatorzusammensetzung einfach und reproduzierbar einstellen.

Die erfindungsgemässen Initiatorzusammensetzungen lassen sich mit kationisch polymerisierbaren organischen Materialien zu härtbaren Zusammensetzungen mit den oben beschriebenen vorteilhaften Eigenschaften kombinieren. So können beispielsweise die sehr hoch reaktiven Verbindungen der Formel I mit Komponente i) und dem kationisch polymerisierbaren Monomeren so weit verdünnt werden, dass deren Gehalt nur noch 1‰ des Gemisches ausmacht.

Die Erfindung betrifft daher auch härtbare Zusammensetzungen enthaltend a) ein kationisch polymerisierbares organisches Material, und b) eine Initiatorzusammensetzung, wie oben definiert.

Die Verarbeitungsstabilität einer solchen härtbaren Zusammensetzung ist beispielsweise über die Menge an Initiatorzusammensetzung oder an Gehalt an aktiver Komponente ii) so einstellbar, dass man bei niedrigen Temperaturen eine für die Verarbeitung ausreichende Lagerstabilität erhält.

Die Menge an Initiatorkomponente b) beträgt in der Regel 0,05 bis 0,5 Gewichtsteile, vorzugsweise 0,15 - 0,3 Gewichtsteile, bezogen auf einen Gewichtsteil des kationisch polymerisierbaren Materials.

Das Vermischen der Komponenten a) und b) erfolgt in der Regel bei niedrigen Temperaturen, beispielsweise unterhalb von 50°C, um ein vorzeitiges Gelieren oder Aushärten zu vermeiden.

Als kationisch polymerisierbare organische Materialien lassen sich vorzugsweise kationisch polymerisierbare ethylenisch ungesättigte Verbindungen, wie gewisse Mono- oder Diolefine, oder Vinylether, z.B. Methylvinylether, Isobutylvinylether, Trimethylolpropantrivinylether, Ethylenglykoldivinylether, 3,4-Dihydro-2-formyl-2H-pyran und der 3,4-Dihydro-2-formyl-2H-pyran-2-carbonsäureester des 2-Hydroxymethyl-3,4-dihydro-2H-pyrans, oder Vinylester, wie Vinylacetat oder Vinylstearat, oder kationisch polymerisierbare heterocyclische Verbindungen, wie kationisch polymerisierbare cyclische Ether oder Methylolverbindungen einsetzen.

Weitere Beispiele für kationisch polymerisierbare organische Materialien sind in der oben erwähnten EP-A-94,915 beschrieben.

Bevorzugt sind härtbaren Zusammensetzungen, worin Komponente a) ein kationisch polymerisierbarer cyclischer Ether ist.

Zu den ganz besonders bevorzugten Komponenten a) zählen die Epoxidharze.

Die Erfindung betrifft daher insbesondere härtbare Zusammensetzungen enthaltend als Komponente a) eine Verbindung mit durchschnittlich mindestens zwei 1,2-Epoxidgruppen pro Molekül und Komponente b), wie oben definiert.

Es lassen sich eine Vielzahl von gängigen Epoxidharzen als Komponente a) einsetzen. Die Verbindungen können allein oder als Gemisch mehrerer Epoxidharze oder auch in Kombination mit anderen durch Komponente b) härtbaren Monomeren eingesetzt werden.

### Beispiele für Epoxidharze sind:

I) Polyglycidyl- und Poly-(β-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit β-Methylepichlorhydrin in Gegenwart von Basen erhalten werden können.
   Beispiele für Verbindungen mit mindestens zwei Carboxylgruppen im Molekül sind die Polycarbonsäuren, wie bereits weiter oben als Komponenten zur Herstellung des Esterliganden L beschrieben worden sind.
II) Polyglycidyl- und Poly-(β-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit β-Methylepichlorhydrin unter alkalischen Bedingungen oder in Anwesenheit eines sauren Katalysators und anschliessender Akalibehandlung erhalten werden können. Beispiele für Verbindungen mit mindestens zwei alkoholischen Hydroxylgruppen und/oder phenolischen Hydroxylgruppen im Molekül sind die mehrwertigen Alkohole, die bereits weiter oben als Komponenten zur Herstellung des Etherliganden L beschrieben worden sind; oder Alkohole enthaltend aromatische Gruppen, wie N,N-Bis-(2-hydroxyethyl)-anilin; oder Novolake, die durch Kondensation von Aldehyden, wie Formaldehyd, Acetaldehyd, Chloral oder Furfuraldehyd mit gegebenenfalls alkyl- oder halogensubstituierten Phenolen, wie Phenol, den oben beschriebenen Bisphenolen, 2- oder 4-Methylphenol, 4-tert.Butylphenol, p-Nonylphenol oder 4-Chlorphenol erhältlich sind.
III) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.
IV) Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxycyclopentyloxy)-ethan, 2,3-Epoxycyclopentylglycidylether, Bis-(2,3-epoxycyclopentyl)-ether, 5(6)-Glycidyl-2-(1,2-epoxiethyl)-bicyclo[2.2.1]heptan, Dicyclopentadiendioxid, 3,4-Epoxy-6-methylcyclohexylmethyl-3′,4′-epoxy-6′-methylcyclohexancarboxylat oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu solchen Verbindungen zählen beispielsweise der Glycidyletherglycidylester der Salicylsäure.

Die erfindungsgemässen härtbaren Zusammensetzungen lassen sich in beliebiger Form erhalten, beispielsweise als homogene flüssige oder feste Gemische. Diese Zusammensetzungen lassen sich direkt thermisch härten, wobei die Härtungstemperaturen im allgemeinen wesentlich unter denen vorbekannter Zusammensetzungen liegen.

Das Einmischen der vorzugsweise flüssigen Initiatorkomponente in das kationisch polymerisierbare organische Material kann mit üblichen Mitteln, wie mit Rührern, Walzen oder Knetern, durchgeführt werden und erfolgt vorzugsweise bei Temperaturen unterhalb von 50°C.

Vorzugsweise härtet man unterhalb von 220°C, insbesondere im Bereich von 180 bis 200°C. Es lässt sich allerdings auch eine Vorhärtung bei tieferen Temperaturen bis zum Gelieren der härtbaren Zusammensetzung durchführen, an die sich dann eine Aushärtung bei höheren Temperaturen anschliesst.

Die gehärteten Produkte zeichnen sich durch gute mechanische und elektrische, insbesondere durch die weiter oben beschriebenen vorteilhaften Endeigenschaften aus.

Die Erfindung betrifft daher auch ein Verfahren zur Herstellung von gehärteten Produkten, dadurch gekennzeichnet, dass man eine erfindungsgemässe härtbare Zusammensetzung durch Erhitzen härtet; ferner betrifft die Erfindung die durch Erhitzen der erfindungsgemässen härtbaren Zusammensetzungen erhältlichen gehärteten Produkte.

Gewünschtenfalls kann man den härtbaren Zusammensetzungen zur Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Zusammensetzungen ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite®, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, sowie Flammschutzmittel, Entschäumungsmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten.

Der Anteil von Zusätzen beläuft sich üblicherweise auf 0-70 Gewichtsteile, bezogen auf 100 Gewichtsteile der härtbaren Zusammensetzung.

Die erfindungsgemässen härtbaren Zusammensetzungen lassen sich ganz allgemein zur Herstellung von gehärteten Produkten einsetzen, und können in der dem jeweils speziellen Anwendungsgebiet angepassten Formulierung, beispielsweise als Beschichtungsmassen, Lacke, Pressmassen, Tauchharze, Giessharze, Imprägnierharze, Laminierharze, Klebmittel oder Matrixharze eingesetzt werden.

Insbesondere lassen sich die erfindungsgemässen härtbaren Zusammensetzungen als Umhüllungsmaterial für aktive und passive elektronische Bauteile, zur Herstellung von isolierenden Materialien oder von Formkörpern einsetzen.

Die Erfindung betrifft auch die Verwendung der härtbaren Gemische für die oben erwähnten Zwecke.
Die vorliegenden Beispiele erläutern die Erfindung.
Die ¹H-NMR Spektren werden mit einem 100 MHz Gerät gemessen. Die DSC Differential Scanning Calorimetry) Versuche werden mit einem Mettler TA 3000 DSC-Gerät ermittelt. Die Aufheizrate beträgt dabei 10°C/Min.

### I. Herstellung der Verbindungen der Formel I

### I.1. Herstellung von Hexa-(caprolacton)-eisen-II-hexafluoroantimonat [Verfahren a)]

80 g (104.2 mMol) Bis-(η⁶-mesitylen)-eisen-II-hexafluoroantimonat werden in 150 ml Caprolacton gelöst, unter Argon entgast und unter Kühlung mit einer UV Lampe (5000 W Staublampe) belichtet. Nach 35 Minuten Belichtungszeit wird das Produkt durch Zugabe von 800 ml trockenem Toluol isoliert, unter Schutzgas filtriert, gewaschen und bei Raumtemperatur im Hochvakuum getrocknet. Man erhält 118,6 g (97,8 mMol = 94% der Theorie) eines weissen, kristallinen, sehr hygroskopischen Produktes.

| Elementaranalyse für C₃₆H₆₀O₁₂FeSb₂F₁₂: | | | | | |
|---|---|---|---|---|---|
| | C | H | Fe | Sb | F |
| Berechnet: | 35,67 | 4,99 | 4,61 | 20,09 | 18,81; |
| Gefunden: | 35,59 | 4,95 | 5,00 | 21,30 | 18,55; |

IR (KBr): starke Bande bei 660 cm⁻¹ (SbF₆⁻); die weiteren Hauptbanden im IR Spektrum entsprechen weitgehend denjenigen von Caprolacton;
¹H-NMR (D₂O): Signale bei: 4,36 ppm (2H); 2,67 ppm (2H); und 1,77 ppm;
DSC: Endotherme Zersetzung bei 240°C.

### I.2. Herstellung von Tris-(ethylenglykoldimethylether)-eisen-II-hexafluoroantimonat [Verfahren a) + e)]

2 g (2,6 mMol) Bis-(η⁶-mesitylen)-eisen-II-hexafluoroantimonat werden in 8 ml trockenem Aceton gelöst und unter Argon entgast. Die rote Lösung wird gekühlt und mit einer UV-Lampe belichtet (5000W-Staublampe). Nach ca. 5 Minuten ist die Lösung vollständig entfärbt. Es werden 5 ml Ethylenglycoldimethylether zugegeben. Am Vakuum wird das Aceton entfernt und die gebildeten Kristalle unter Schutzgas abfiltriert und dreimal mit Toluol gewaschen. Nach Trocknen am Hochvakuum bei Raumtemperatur resultieren 2,01 g (2,52 mMol = 97% d.Th.) weisse, sehr hygroskopische Kristalle.

| Elementaranalyse für C₁₂H₃₀O₆FeSb₂F₁₂: | | |
|---|---|---|
| | C | H |
| Berechnet: | 18,07 | 3,79; |
| Gefunden: | 16,80 | 3,96; |

¹H-NMR (D₂O): 3,62 ppm Singulett (2H); 3,37 ppm Singulett (3H).

### I.3. Herstellung von Bis-(diethylenglykoldimethylether)-eisen-II-hexafluoroantimonat [Verfahren a) + e)]

In analoger Weise wie beim Beispiel I.2. wird durch Belichten von 2,0 g (= 2,6 mMol) Bis-(η⁶-mesitylen)-eisen-II-hexafluoroantimonat in trockenem Aceton und anschliessender Zugabe von Diglyme 2,0 g (2,51 mMol = 96% d.Th.) der oben genannte Verbindung erhalten.

| Elementaranalyse für C₁₂H₂₈O₆FeSb₂F₁₂: | | |
|---|---|---|
| | C | H |
| Berechnet: | 18,11 | 3,55; |
| Gefunden: | 18,05 | 3,87; |

¹H-NMR (D₂O): 3,38 ppm Singulett (3H); 3,66 ppm Singulett (4H).

### I.4. Herstellung von Tris-(essigsäureanhydrid)-eisen-II-hexafluoroantimonat [Verfahren a)]

15 g (19,53 mMol) Bis-(η⁶-mesitylen)-eisen-II-hexafluoroantimonat werden in 30 ml Essigsäureanhydrid gelöst und unter Argon entgast. Nach Belichten analog Beispiel I.2. entfärbt sich die Lösung nach ca. 20 Minuten vollständig. Nach Isolation mit Toluol resultieren 15,9 g (19,07 mMol ≙ 98% d.Th.) weisse sehr hygroskopische Kristalle.

| Elementaranalyse für C₁₂H₁₈O₉FeSb₂F₁₂: | | |
|---|---|---|
| | C | H |
| Berechnet: | 17,28 | 2,17; |
| Gefunden: | 16,84 | 2,45; |

IR (KBr): 1820, 1800 1630, 1600, 1140, 1000, 900 und 660 cm⁻¹;
¹H-NMR (D₂O): 2,2 ppm Singulett;
DSC: endotherme Peaks bei 130°C (schwach) und 220°C (stark); exotherme Zersetzung: > 270°C.

### I.5. Herstellung von Hexa-(aceton)-eisen-II-hexafluoroantimonat [Verfahren a)]

40 g (52,10 mMol) Bis-(η⁶-mesitylen)-eisen-II-hexafluoroantimonat werden in 120 ml Aceton gelöst und unter Argon entgast. Nach Belichten analog Beispiel I.2. entsteht eine vollständig farblose Lösung, aus welcher nach Zugabe von 400 ml Toluol das Produkt auskristallisiert. Nach Filtration und Waschen unter Schutzgas erhält man nach Trocknen bei Raumtemperatur am Hochvakuum 43,5 g (49,71 mMol = 95% d.Th.) farblose, sehr hygroskopische Kristalle.

| Elementaranalyse für C₁₈H₃₆O₆FeSb₂F₁₂: | | |
|---|---|---|
| | C | H |
| Berechnet: | 24,69 | 4,14; |
| Gefunden: | 23,60 | 4,07; |

¹H-NMR (D₂O): 2,22 ppm Singulett;
IR (KBr): 3400, 1700, 1380, 1240 und 660 cm⁻¹;
DSC: Endothermie 115°C; Exothermie 173°C.

### I.6. Herstellung von Hexa-(methylhexahydrophthalsäureanhydrid)-eisen-II-hexafluoroantimonat [Verfahren a)]

6 g (7,81 mMol) Bis-(η⁶-mesitylen)-eisen-II-hexafluoroantimonat werden fein pulverisiert in 30 ml Methylhexahydrophthalsäureanhydrid dispergiert und zum Teil gelöst. Nach Entgasen mit Argon wird analog Beispiel I.2. belichtet bis alles Edukt vollständig gelöst und die Lösung vollständig entfärbt ist. Nach Zugabe von 100 ml trockenem Toluol ist alles klar löslich. Nach Zugabe von 200 ml Hexan (trocken) wird das Produkt gefällt, unter Schutzgas das gebildete Öl abgetrennt und mit Toluol:Hexan (1:2) gewaschen. Nach Trocknen am Hochvakuum bei Raumtemperatur resultieren 9,8 g (6,37 mMol = 82% d.Th.) eines amorphen Produktes.

| Elementaranalyse für C₅₄H₇₂O₁₈FeSb₂F₁₂: | | |
|---|---|---|
| | C | H |
| Berechnet: | 42,21 | 4,72; |
| Gefunden: | 41,9 | 4,84; |

IR (KBr): starke Bande im IR-Spektrum bei 660 cm⁻¹; die Hauptbanden im IR Spektrum entsprechen denjenigen von Methylhexahydrophthalsäureanhydrid.

### I.7. Herstellung von Hexa-(hexahydrophthalsäureanhydrid)-eisen-II-hexafluoroantimonat [Verfahren a)]

6 g (7,81 mMol) Bis-(η⁶-mesitylen)-eisen-II)-hexafluoroantimonat werden bei 45°C in 25 g Hexahydrophthalsäureanhydrid gelöst und unter Argon entgast. Die rote Lösung wird analog Beispiel I.2. belichtet is zum vollständigen Ausbleichen. Nach Zugabe von 50 ml trockenem Toluol entsteht eine klare Lösung, aus welcher durch Zugabe von 100 ml Hexan sich ein Öl abscheidet. Nach Abdekantieren, Waschen unter Schutzgas und Trocknen bei Raumtemperatur am Hochvakuum resultieren 10,9 g (7,5 mMol = 96% d.Th.) eines amorphen, festen Produkts, welches hygroskopisch ist.

| Elementaranalyse für C₄₈H₆₀O₁₈FeSb₂F₁₂: | | |
|---|---|---|
| | C | H |
| Berechnet: | 39,69 | 4,16; |
| Gefunden: | 39,58 | 4,60; |

¹H-NMR (CDCl₃): 3,59 ppm (2H); 2,70 ppm (4H); 2,17 und 1,90 ppm (4H);
IR (KBr): Bande bei 660 cm⁻¹; die Hauptbanden im IR Spektrum entsprechen denjenigen von Hexahydrophthalsäureanhydrid.

### I.8. Herstellung von Hexa-(maleinsäureanhydrid)-eisen-II-hexafluoroantimonat [Verfahren a)]

3,25 g (4,23 mMol) Bis-(η⁶-mesitylen)-eisen-II-hexafluoroantimonat werden mit 6,95 g Maleinsäureanhydrid durch Aufschmelzen des Anhydrids gelöst, mit Argon entgast und analog Beispiel I.2. während 30 Minuten belichtet. Die Lösung bleicht nicht vollständig aus. Das gebildete Produkt ist gelblich. Nach Zugabe von Toluol (30 ml) bildet sich ein gelbes kristallines Produkt, welches unter Schutzgas filtriert und gewaschen wird. Nach Trocknen am Hochvakuum bei Raumtemperatur erhält man 4,7 g (4,21 mMol = 99% d.Th.) gelbe sehr hygroskopische Kristalle, die an der Luft zerfliessen und sich entfärben.

| Elementaranalyse für C₂₄H₁₂O₁₈FeSb₂F₁₂: | | |
|---|---|---|
| | C | H |
| Berechnet: | 25,83 | 1,08; |
| Gefunden: | 24,2 | 2,0; |

¹H-NMR (D₂O): Singulett bei 6,44 ppm;
IR (KBr): Bande bei 660 cm⁻¹, die übrigen Banden entsprechen weitgehend denen von Maleinsäureanhydrid;
DSC: Endothermer Peak bei 115°C (schwach) und 255°C (stark).

### I.9. Herstellung von Hexa-(tetrahydrofuran-eisen-II-hexafluoroantimonat [Verfahren a)]

10 g (20,97 mMol) (η⁶-Cumol)(η⁵-cyclopentadienyl)-eisen-II-hexafluoroantimonat werden in 70 ml Tetrahydrofuran (trocken) gelöst und unter Argon entgast. Die gelbe Lösung wird anschliessend analog Beispiel I.2. während 30 Minuten belichtet. Das Produkt kristallisiert aus, wird unter Schutzgas abfiltriert, dreimal mit THF gewaschen und am Hockvakuum bei Raumtemperatur getrocknet. Man erhält 9,25 g (9,636 mMol = 92% d.Th.) eines sehr hygroskopischen weissen, kristallinen Produktes, welches an der Luft sehr rasch THF gegen Wasser austauscht.

| Elementaranalyse für C₂₄H₄₈O₆FeSb₂F₁₂ | | | | | |
|---|---|---|---|---|---|
| | C | H | Fe | Sb | F |
| Berechnet: | 30,02 | 5,04 | 5,82 | 25,37 | 23,75; |
| Gefunden: | 28,96 | 4,89 | 5,1 | 25,7 | 22,8; |

¹H-NMR (d₄-Essigsäure): 2,32 ppm (Singulett, 2H); 4,66 ppm (Singulett, 2H);
IR (KBr): Banden bei 3400, 2950, 2880, 1460, 1040, 1020, 900 und 660 cm⁻¹;
DSC: Endothermer Peak bei 165°C; exotherme Zersetzung bei 190°C.

### I.10. Herstellung von Hexa-(dimethylmaleinsäureanhydrid)-eisen-II-hexafluoroantimonat [Verfahren a)]

3 g (3,907 mMol) Bis-(η⁶-mesitylen)-eisen-II-hexafluoroantimonat werden mit 7,6 g frisch sublimiertem Dimethylmaleinsäureanhydrid aufgeschmolzen und unter Argon entgast. Die Mischung wird auf 120°C erwärmt. Das Edukt geht langsam in Lösung und es entsteht eine rote Lösung, die sich nach ca. 10 Minuten gelb verfärbt und auszukristallisieren beginnt. Es wird auf Raumtemperatur abgekühlt. Zum festen Produkt wird trockenes Toluol (50 ml) zugegeben und das überschüssige Anhydrid gelöst. Nach Filtration unter Schutzgas und dreimaligem Waschen wird das Produkt bei Raumtemperatur am Hochvakuum getrocknet. Es resultieren 4,9 g (3,81 mMol = 98% d.Th.) eines gelben kristallinen sehr hygroskopischen Produktes, welches an der Luft durch Wasseraufnahme farblos wird.

| Elementaranalyse für C₃₆H₃₆O₁₈FeSb₂F₁₂ | | |
|---|---|---|
| | C | H |
| Berechnet: | 33,67 | 2,82; |
| Gefunden: | 30,77 | 3,34; |

¹H-NMR (DMSO): Singulett bei 1,98 ppm;
IR (KBr): Sehr starke Bande bei 660 cm⁻¹; die übrigen Banden entsprechen weitgehend denen von Dimethylmaleinsäureanhydrid; starke OH-Bande bei 3400 cm⁻¹ durch H₂O-Aufnahme.

### I.11. Herstellung von Hexa-(phthalsäureanhydrid)-eisen-II-hexafluoroantimonat [Verfahren a)]

6 g (7,81 mMol) Bis-(η⁶-mesitylen)-eisen-II-hexafluoroantimonat werden in 25 g Phthalsäureanhydrid (destilliert) entgast und unter Argon auf 130°C erwärmt. Nach 1 Stunde bei 130°C wird auf 100°C abgekühlt und man gibt 150 ml heisses Toluol zu. Es bildet sich ein gelber Niederschlag, welcher unter Schutzgas heiss filtriert wird und nochmals dreimal mit heissem trockenen Toluol gewaschen wird. Nach Trocknen am Hochvakuum resultiert 6,6 g eines gelben, hygroskopischen kristallinen Produktes, welches an der Luft farblos wird.
IR (KBr): Starke Bande bei 660 cm⁻¹; weitere Banden bei 3400, 1850, 1790, 1630, 1600, 1260, 1110, 910 und 540 cm⁻¹;
¹H-NMR (CDCl₃): Signal bei 7,95 ppm (Multiplett, Phthalsäureanhydrid).

### I.12. Herstellung von Hexa-(methylhexahydrophthalsäureanhydrid)-eisen-II-hexafluoroantimonat [Verfahren a)]

30,8 g (40,119 mMol) Bis-(η⁶-mesitylen)-eisen-II-hexafluoroantimonat werden fein pulverisiert, 2 Stunden bei 120°C am Hochvakuum getrocknet, anschliessend zu 102,4 g Methylhexahydrophthalsäureanhydrid gegeben, unter Argon entgast und auf 120°C erwärmt. Nach ca. 20 Minuten ist alles in Lösung gegangen und die rote Farbe ist verschwunden. Am Vakuum wird anschliessend das Mesitylen entfernt (Gewichtsverlust: 9,7 g). Es resultiert eine leicht bräunliche 49,8%-ige Lösung der obigen Verbindung im Anhydrid, welche analog Beispiel I.6. isoliert werden kann.
IR (KBr): starke Bande bei 660 cm⁻¹; die übrigen Banden entsprechen weitgehend denen des Anhydrids;

| Elementaranalyse für C₅₄H₆₀O₁₈FeSb₂F₁₂ | | |
|---|---|---|
| | C | H |
| Berechnet: | 42,21 | 4,72; |
| Gefunden: | 41,53 | 4,84. |

### I.13. Herstellung von Hexa-(caprolacton)-eisen-II-hexafluoroantimonat [Verfahren a)]

26 g (33,8 mMol) Bis-(η⁶-mesitylen)-eisen-II-hexafluoroantimonat werden in 50 ml Caprolacton unter Argon entgast und auf 120°C erwärmt. Nach 5 Minuten wird die rote Lösung farblos. Nach Abkühlen auf Raumtemperatur wird das Produkt durch Zugabe von 400 ml trockenem Toluol auskristallisiert. Nach Filtrieren und Waschen (Toluol) unter Schutzgas wird bei Raumtemperatur am Hochvakuum getrocknet. Es resultieren 37,8 g (31,18 mMol = 92% d.Th.) weisse, sehr hygroskopische Kristalle.

| Elementaranalyse für C₃₆H₆₀O₁₂FeSb₂F₁₂: | | |
|---|---|---|
| | C | H |
| Berechnet: | 35,67 | 4,99; |
| Gefunden: | 35,47 | 5,06; |

IR (KBr): IR-Spektrum ist identisch mit demjenigen Produkt, das mit UV-Licht hergestellt wurde (I.1.).

Die Substanz ist identisch mit der nach I.1. hergestellten Verbindung.

### I.14. Herstellung von Hexa-(tetrahydrofuran)-zink-II-hexafluoroantimonat [Verfahren c)]

10 ml (22 mMol) Zinkchloridetherat in Methylenchlorid (2,2 Mol) werden zu 80 ml trockenem Tetrahydrofuran (THF) zugegeben, unter Argon entgast und im Eisbad auf 0°C gekühlt. Es werden 12 g (35,4 mMol) festes Triethyloxoniumhexafluoroantimonat zugegeben. Es löst sich sofort auf und nach ca. 10 Minuten beginnt das Produkt auszukristallisieren. Die Reaktionsmischung wird auf Raumtemperatur erwärmt und nach 4 Stunden abfiltriert, unter Schutzgas dreimal mit THF gewaschen und am Hochvakuum bei Raumtemperatur getrocknet. Man erhält 16,3 g (16,8 mMol = 95% d.Th.) farblose, sehr hygroskopische Kristalle.

| Elementaranalyse für C₂₄H₄₈O₆ZnSb₂F₁₂: | | | | | |
|---|---|---|---|---|---|
| | C | H | Zn | Sb | F |
| Berechnet: | 29,73 | 4,99 | 6,74 | 25,12 | 23,52; |
| Gefunden: | 28,2 | 4,9 | 7,1 | 25,8 | 23,5; |

¹H-NMR (DMSO): Signale bei 3,95 ppm (2H, Multiplett); 1,75 ppm (2H, Multiplett);
IR (KBr): Starke Bande bei 660 cm⁻¹, weitere Banden bei 2860, 2980, 1460, 1080 und 910 cm⁻¹;
Schmelzpunkt: 180-200°C (Zersetzung).

### I.15. Herstellung von Tris-(ethylenglykoldimethylether)-zink-II-hexafluoroantimonat [Verfahren c)]

1 g (2,95 mMol) Triethyloxoniumhexafluoroantimonat wird in 4 ml trockenem Ethylenglycoldimethylether gelöst. Dazu werden langsam 0,6 ml (1,32 mMol) Zinkchlorid-etherat in CH₂Cl₂ (2,2 Mol) zugegeben. Nach Erwärmen auf 40°C beginnt das Product auszukristallisieren. Nach Filtration unter Schutzgas und dreimal waschen mit Ethylenglycoldimethylether wird bei Raumtemperatur am Hochvakuum getrocknet. Es resultieren 0,4 g (0,5 mMol = 33% d.Th.) eines farblosen kristallinen sehr hygroskopischen Produktes.

| Elementaranalyse für C₁₂H₃₀O₆ZnSb₂F₁₂: | | |
|---|---|---|
| | C | H |
| Berechnet: | 17,85 | 3,74; |
| Gefunden: | 16,96 | 4,17; |

¹H-NMR (D₂O): Banden bei 3,69 ppm (2H, Singulett), 3,36 ppm (3H, Singulett).

### I.16. Herstellung von (18-Krone-6)-zink-II-hexafluoroantimonat [Verfahren c)]

0,8 ml (1.76 mMol) Zinkchloridetherat in CH₂Cl₂ (2,2 Mol) werden zu 1 g 18-Krone-6 gelöst in 8 ml CH₂Cl₂ zugegeben. Dazu werden 10 g (2,9 mMol) Triethyloxoniumhexafluoroantimonat zugegeben und bei Raumtemperatur belassen. Nach ca. 30 Minuten kristallisiert das Produkt aus. Nach Filtration, Waschen mit Methylenchlorid und Trocknen am Hochvakuum bei Raumtemperatur erhält man 0,6 g farblose, an der Luft beständige Kristalle.
¹H-NMR (D₂O): Singulett bei 3,67 ppm;
IR (KBr): Starke Bande bei 660 cm⁻¹; weitere Banden bei 3400, 3200, 2900, 1470, 1350, 1260, 1100 (starke Bande), 950 und 820 cm⁻¹.

### I.17. Herstellung von Tris-(ethylenglykoldimethylether)-eisen-II-hexafluoroantimonat [Verfahren c)]

0,37 g (0,91 mMol) FeCl₂ werden in 10 ml trockenem Ethylenglykoldimethylether dispergiert und unter Argon entgast. Dazu werden 2 g (5,9 mMol) Triethyloxoniumhexafluoroantimonat zugegeben. Nach 2 Stunden Rühren bei Raumtemperatur wird die Lösung dunkel und es bilden sich feine Kristalle. Nach 4 Stunden wird unter Schutzgas filtriert, dreimal mit Ethylenglykoldimethylether gewaschen und bei Raumtemperatur am Hochvakuum getrocknet. Es resultieren 20 g (2,51 mMol = 86% d.Th.) einer weissen, sehr hygroskopischen kristallinen Verbindung.

| Elementaranalyse für C₁₂H₃₀O₆FeSb₂F₁₂: | | |
|---|---|---|
| | C | H |
| Berechnet: | 18,06 | 3,79; |
| Gefunden: | 17,70 | 4,02; |

IR (KBr): Starke Bande bei 660 cm⁻¹; Banden bei 3400, 3000, 2900, 1460, 1240 und 1050 cm⁻¹;
¹H-NMR (D₂O): Singulett bei 3,68 ppm (2H); 3,35 ppm (3H).

### I.18. Herstellung von Bis-(ethylenglykoldimethylether)-mangan-II-hexafluoroantimonat [Verfahren c)]

0,33 g (2,62 mMol) MnCl₂ wasserfrei werden in 10 ml trockenem Ethylenglycoldimethylether suspendiert und unter Argon entgast. Dazu werden 2,0 g (5,9 mMol) Triethyloxoniumhexafluoroantimonat zugegeben und bei Raumtemperatur gerührt. Das MnCl₂ löst sich und es bilden sich feine Kristalle. Nach 4 Stunden wird die violette Lösung unter Schutzgas filtriert, dreimal mit Ethylenglycoldimethylether gewaschen und bei Raumtemperatur am Hochvakuum getrocknet. Man erhält 1,4 g farblose Kristalle, welche an der Luft zerfliessen.
IR (KBr): Starke Bande bei 660 cm⁻¹; weitere Banden bei 2980, 2920, 1460, 1100, 1060 und 880 cm⁻¹.

### I.19. Herstellung von Hexa-(aceton)-eisen-II-hexafluoroantimonat [Verfahren b)]

0,5 g (3,94 mMol) FeCl₂ (wasserfrei) werden in 20 ml Aceton dispergiert und unter Argon entgast. Dazu werden 2,70 g (7,88 mMol) festes AgSbF₆ zugegeben. Es bildet sich in leicht exothermer Reaktion AgCl. Nach 30 Minuten wird das AgCl unter Schutzgas abfiltriert und mit Aceton gewaschen. Es resultieren 1,1 g (7,72 mMol ≙ 98% d. Th.) AgCl. Die Acetonlösung wird am Vakuum eingeengt und mit 30 ml trockenem Toluol kristallisiert. Man erhält 2,35 g (7,68 mMol = 68% d. Th.) weisse, sehr hygroskopische Kristalle.
¹H-NMR (D₂O): Signal bei 2,08 ppm Singulett;
IR (KBr): Starke Bande bei 660 cm⁻¹; weitere Banden bei 1700, 1420, 1380, 1240 und 1050 cm⁻¹;
DSC: Exotherme Zersetzung bei 173°C.

### I.20. Herstellung von (Aceton)-zinn-II-hexafluoroantimonat [Verfahren b)]

Analog Beispiel I.19 wird die obige Verbindung durch Umsetzen stöchiometrischer Mengen SnCl₂ und 2AgSbF₆ als hygroskopisches Öl isoliert.

### I.21. Herstellung von (Tetrahydrofuran)-zinn-II-hexafluoroantimonat [Verfahren d)]

1,58 g (7,29 mMol) SbF₅ wird mit Argon entgast, auf -78°C gekühlt und vorsichtig mit 5 ml trockenem Ethylenglycoldimethylether und 0,58 g (3,70 mMol) SnF₂ versetzt. Man erwärmt die Mischung langsam auf Raumtemperatur. Nach ca. 2 Stunden ist alles SnF₂ gelöst. Man gibt 20 ml trockenes THF zu und filtriert den gebildeten Niederschlag unter Schutzgas rasch ab, wäscht mit THF nach und trocknet am Hochvakuum bei Raumtemperatur. Man erhält 1,9 g weisser, sehr hygroskopischer Kristalle.
¹H-NMR (D₂O): Banden bei 3,74 ppm (2H, Multiplett), 1,87 ppm (2H, Multiplett);
IR (KBr): Starke Bande bei 660 cm⁻¹; weitere Banden bei 3400, 2900, 2840, 1620, 1420, 1240, 1110 und 860 cm⁻¹.

### I.22. Herstellung von (Tetrahydrofuran)-(diacetonalkohol)-eisen-II-hexafluoroantimonat [Verfahren d)]

0,68 g (1,291 mMol) Fe(SbF₆)₂ werden zu 5 ml Aceton unter Argon gegeben. Das Eisensalz löst sich exotherm und es entsteht eine dunkele Lösung. Nach Filtration von Spuren unlöslichen Produkts wird THF zugegeben, der gebildete Niederschlag unter Schutzgas abfiltriert und dreimal mit THF gewaschen. Nach Trocknen am Hochvakuum bei Raumtemperatur erhält man 0,9 g gelbliche, hygroskopische Kristalle.
IR (KBr): Starke Bande bei 660 cm⁻¹, weitere Banden bei 3440, 3000, 2880, 1680, 1380, 1200, 1170, 1120 und 880 cm⁻¹;
¹H-NMR (D₂O): Banden bei 3,76 ppm (8H), 1,89 ppm (8H), 2,74 ppm (2H, Singulett), 2,24 ppm (3H, Singulett) und 1,27 ppm (6H, Singulett), THF : Diacetonalkohol = 2:1.

### I.23. Herstellung von (Polyethylenglykol)(aceton)-eisen-II-hexafluoroantimonat [Verfahren a) + e)]

2,5 g (3,25 mMol) Bis-(η⁶-mesitylen)-eisen-II-hexafluoroantimonat werden in 10 ml Aceton gelöst und 0,7 g Polyethylenglycol 200 zugegeben. Nach Belichten analog Beispiel I.2. bleicht die Lösung vollständig aus. Nach Zugabe von Toluol wird das Produkt unter Schutzgas abfiltriert, gewaschen und am Hochvakuum getrocknet. Es resultieren 2,5 g eines festen, hygroskopischen Produktes.
¹H-NMR (D₂O): Banden bei 3,93 ppm, 3,74 ppm und 2,23 ppm; Aceton: Polyethylenglycol ca. 1 : 1.

### I.24. Herstellung von (Tetrahydrofuran)-aluminium-III-hexafluoroantimonat [Verfahren c)]

0,13 g (0,87 mMol) Aluminiumtrichlorid werden in 2 g trockenem Diethylether gelöst und anschliessend 5 ml trockenes Tetrahydrofuran zugegeben. Zur klaren Lösung werden unter Argon als Schutzgas 10 g (2,95 mMol) festes Triethyloxoniumhexafluoroantimonat zugegeben, welches sich sofort löst. Nach ca. 5 Minuten beginnt das Produkt auszukristallisieren. Nach 2 Stunden bei 40°C wird unter Schutzgas abfiltriert, zweimal mit trockenem THF gewaschen und bei Raumtemperatur am Hochvakuum getrocknet. Man erhält 0,9 g feine farblose Kristalle.
¹H-NMR (D₂O): Signale bei 3,73 ppm (2H) und 1,78 ppm (2H);
IR (KBr): Starke Bande bei 660 cm⁻¹; weitere Banden bei 2880, 2900, 1450, 1360; 1250, 1220, 1150 und 880 cm⁻¹;
DSC: Peak bei 175°C + 220°C (exotherme Zersetzung).

### I.25. Herstellung von (Aceton)-magnesium-II-hexafluoroantimonat [Verfahren b)]

Analog Beispiel I.19. wird die oben genannte Verbindung durch Umsetzen von MgCl₂ und AgSbF₆ als sehr hygroskopisches, farbloses Produkt isoliert.

### I.26. Herstellung von (Essigsäure)-eisen-II-hexafluoroantimonat [Verfahren a)]

3,0 g (3,91 mMol) Bis-(η⁶-mesitylen)-eisen-II-hexafluoroantimonat werden in 25 ml Essigsäure suspensiert und unter Argon entgast. Die Suspension wird auf 120°C erwärmt. Nach 1 Stunde ist alles gelöst und die rote Farbe ist verschwunden. Die Essigsäure wird eingeengt und das Produkt wird am Hochvakuum bei Raumtemperatur zur Trockne eingeengt. Man erhält 3,05 g festes hygroskopisches, beiges Produkt.
¹H-NMR (D₂O): Singulett bei 2,09 ppm.

### I.27. Herstellung von (Tetrahydrofuran)-eisen-II-hexafluoroantimonat [Verfahren e)]

1,0 g (Essigsäure)-eisen-II-hexafluoroantimonat werden in 10 ml THF suspendiert und während 5 Minuten refluxiert. Nach Abkühlen auf Raumtemperatur wird unter Schutzgas abfiltriert und mit THF gewaschen. Es resultieren 0,95 g weisses, sehr hygroskopisches Produkt.
¹H-NMR (D₂O): Banden bei 3,75 ppm (2H) und 1,89 ppm (2H).

### II. Herstellung der erfindungsgemässen Initiatorzusammensetzungen

### Beispiele II.1. bis II.3.

In einer Lösung bestehend aus 90 g Methylhexahydrophthalsäureanhydrid und 10 g eines Umsetzungsproduktes aus zwei Aequivalenten Tetrahydrophthalsäureanhydrid und einem Aequivalent 2,2′-Dimethylpropandiol wird 1 g des Komplexes gemäss Beispiel I.9., I.4. bzw. I.1. unter Erwärmen (50°C/eine Stunde) gelöst.

### Beispiele II.4. und II.5.

In einer Lösung bestehend aus 100 g Methylhexahydrophthalsäureanhydrid wird 1 g des Komplexes gemäss Beispiel I.1. bzw. I.14. unter Erwärmen (50°C/eine Stunde) gelöst.

### Beispiel II.6.

Die 49,8%ige Lösung des Komplexes gemäss Beispiel I.12. wird mit Methylhexahydrophthalsäureanhydrid 100-fach verdünnt.

### Beispiel II.7.

In 98 Teilen Diisocyanatodiphenylmethan werden 2 g des Komplexes gemäss Beispiel I.9. unter Erwärmen (50°C/eine Stunde) gelöst.

### Beispiel II.8.

In 98 Teilen Propylencarbonat werden 2 g des Komplexes gemäss Beispiel I.1. gelöst.

### Beispiel II.9.

In 98 Teilen Caprolacton werden 2 g des Komplexes gemäss Beispiel I.1. gelöst.

### II.10. Herstellung einer Initiatorlösung enthaltend (Methylhexahydrophthalsäureanhydrid)-zinn-II-hexafluoroantimonat [Verfahren d)]

30 g Methylhexahydrophthalsäureanhydrid werden bei 120°C unter Argon entgast und mit 1,02 g (6,50 mMol) Zinndifluorid versetzt. Die Suspension wird im Eisbad gekühlt und langsam werden während 30 Minuten 2,80 g (12,92 mMol) SbF₅ zugegeben. Die Mischung wird langsam auf Raumtemperatur erwärmt und 12 Stunden gerührt. Dabei geht das Zinndifluorid fast vollständig in Lösung. Anschliessend wird über eine G-4 Filterfritte filtriert. Es bleibt praktisch kein Rückstand. Diese Initiatorlösung wird 18,4 mit Methylhexahydrophthalsäureanhydrid verdünnt.

### II.11. Herstellung einer Initiatorlösung enthaltend (Methylhexahydrophthalsäureanhydrid)-zinn-II-hexafluoroantimonat-fluorid [Verfahren d)]

Analog Beispiel II.10. werden in 32 g Methylhexahydrophthalsäureanhydrid mit 3,70 g (2,36 mMol) Zinndifluorid und 5,08 g (2,34 mMol) SbF₅ umgesetzt. Nach Filtration von Spuren von unlöslichem Produkt wird die Lösung mit Methylhexahydrophthalsäureanhydrid mit einem Faktor 27,4 verdünnt.

### II.12. Herstellung einer Initiatorlösung enthaltend Hexa-(methylhexahydrophthalsäureanhydrid)-eisen-II-hexafluoroantimonat [Verfahren d)]

3,8 g Methylhexahydrophthalsäureanhydrid werden bei 100°C entgast und unter Argon gehalten. Darin werden bei 40°C 5,8 mg (0,11 mMol) Fe(SbF₆)₂ gelöst. Das Fe(SbF₆)₂ wird gemäss D. Gantar et al. J.Chem.Soc., Dalton Trans., 10, 2379-83 (1978) durch Umsetzung von FeF₂ und SbF₅ in HF hergestellt. Die Lösung wird filtriert und 4,3mal mit Methylhexahydrophthalsäureanhydrid verdünnt. Es resultiert eine 1%ige Lösung des oben genannten Komplexes.

### III. Anwendungsbeispiele

### Beispiel III.1.

70 g eines technischen Bisphenol-A Diglycidylethers (Epoxidwert: 5,2 Aequ./kg), 30 g 3,4-Epoxycyclohexylmethyl-3′,4′-epoxycyclohexancarboxylat und 25 g Härterkomponenten gemäss Beispielen II.1. bis II.3. werden in einer Aluminiumform bei Raumtemperatur vermischt und anschliessend eine Stunde lang auf 200°C erwärmt. Es resultieren feste Formkörper mit folgenden Glasumwandlungstemperaturen (gemessen mit der DSC-Methode):
T_{g} mit Initiatorzusammensetzung aus Beispiel II.1.: 181°C;
T_{g} mit Initiatorzusammensetzung aus Beispiel II.2.: 181°C;
T_{g} mit Initiatorzusammensetzung aus Beispiel II.3.: 179°C.

### Beispiel III.2.

100 g eines technischen Bisphenol-A Diglycidylethers (Epoxidwert: 5,2 Aequ./kg) und 25 g Härterkomponenten gemäss Beispielen II.4. bis II.5. werden in einer Aluminiumform (bei Raumtemperatur vermischt und anschliessend eine Stunde lang auf 200°C erwärmt. Es resultieren feste Formkörper mit folgenden Glasumwandlungstemperaturen (gemessen mit der DSC-Methode):
T_{g} mit Initiatorzusammensetzung aus Beispiel II.4.: 156°C;
T_{g} mit Initiatorzusammensetzung aus Beispiel II.5.: 154°C;
T_{g} mit Initiatorzusammensetzung aus Beispiel II.6.: 164°C.

### Beispiel III.3.

70 g eines technischen Bisphenol-A Diglycidylethers (Epoxidwert: 5,2 Äqu./kg), 30 g 3,4-Epoxicyclohexylmethyl-3′,4′-epoxicyclohexancarboxylat und 25 g Initiatorkomponente gemäss Beispielen II.7. - II.9. werden bei Raumtemperatur vermischt und anschliessend in einem Mettler TA 3000 DSC-Gerät von 30°C bis 300°C erhitzt. Die Aufheizrate beträgt 10°C/Min. Im zweiten DSC-Scan wird der T_{g}-Wert bestimmt.
T_{g} mit Initiatorzusammensetzung aus Beispiel II.7.: 192°C;
T_{g} mit Initiatorzusammensetzung aus Beispiel II.8.: 110°C;
T_{g} mit Initiatorzusammensetzung aus Beispiel II.9.: 107°C.

### Beispiel III.4.

Es wird eine 1%ige Lösung des jeweiligen Komplexes in Methylhexahydrophthalsäureanhydrid hergestellt oder es wird eine Initiatorlösung gemäss Beispielen II.10. - II.12. verwendet. Ein Teil dieser Initiatorzusammensetzungen wird mit vier Teilen einer Mischung aus 70 g eines technischen Bisphenol-A Diglycidylethers (Epoxidwert 5,2 Äqu./kg) und 30 g 3′,4′-Epoxicyclohexylmethyl-3,4-epoxicyclohexancarboxylat unter Eiskühlung gemischt. Diese reaktive Mischung wird in einem Mettler TA 3000 DSC-Gerät mit einer Aufheizrate von 10°C/Min. von 30°C bis 300°C ausgehärtet. In einem zweiten DSC-Scan wird dann der Tg-Wert bestimmt. Die Gelzeit der reaktiven Mischung wird bei 120°C und bei 80°C auf einer Heizplatte bestimmt. Die Resultate sind in der folgenden Tabelle aufgelistet.

**Tabelle 1**

| Katalysator aus Beispiel | Gel.Zeit 120° | 80°C | Tg | Exothermie-Maximum |
|---|---|---|---|---|
| I 1 | 23˝ | 47˝ | 153°C | 105°C+145°C |
| I 2 | 7˝ | 27˝ | 155°C | 110°C+145°C |
| I 3 | 12˝ | 35˝ | 150°C | 140°C |
| I 4 | 15˝ | 43˝ | 162°C | 135°C |
| I 5 | 9˝ | 35˝ | 161°C | 140°C |
| I 6 | 25˝ | 50˝ | 151°C | 145°C |
| I 8 | 22˝ | 50˝ | 149°C | 145°C |
| I 9 | 12˝ | 29˝ | 157°C | 139°C |
| I 10 | 22˝ | 48˝ | 155°C | 110°C+140°C |
| I 11 | 22˝ | 50˝ | 159°C | 110°C+135°C |
| I 12 | 23˝ | 48˝ | 160°C | 140°C |
| I 13 | 22˝ | 45˝ | 155°C | 105°C+140°C |
| I 14 | 17˝ | 43˝ | 168°C | 140°C |
| I 15 | 18˝ | 45˝ | 165°C | 137°C |
| I 16 | 22˝ | 55˝ | 163°C | 138°C |
| I 17 | 11˝ | 30˝ | 148°C | 110°C+140°C |
| I 18 | 20˝ | 80˝ | 163°C | 135°C |
| I 19 | 10˝ | 37˝ | 150°C | 145°C |
| I 20 | 17˝ | 47˝ | 166°C | 142°C |
| I 21 | 12˝ | 65˝ | 152°C | 150°C |
| II 11 | 15˝ | 95˝ | 152°C | 108°C+145°C |
| II 10 | 15˝ | 75˝ | 154°C | 110°C+148°C |
| II 12 | 24˝ | 120˝ | 152°C | 110°C+150°C |
| I 22 | 23˝ | 90˝ | 157°C | 110°C+150°C |
| I 23 | 12˝ | 35˝ | 158°C | 100°C+145°C |
| I 24 (0,5% Kompl) | 20˝ | 90˝ | 158°C | 180°C |
| I 25 | 12˝ | 50˝ | 154°C | 142°C |
| I 26 | 14˝ | 55˝ | 157°C | 100°C+150°C |

## Patentansprüche (Patentansprüche für folgende(n) Vertragsstaat(en): AT, CH, DE, FR, GB, IT, LI, NL, SE)

1. Zusammensetzungen enthaltend
i) ein Anhydrid einer Polycarbonsäure, ein Polyisocyanat, ein cyclisches Carbonat, ein Lacton oder ein Gemisch solcher Verbindungen, und darin gelöst
ii) mindestens eine Verbindung der Formel I
[M⁺ⁿ(L)ₓ]ⁿ⁺ n X⁻ (I),
worin n 2 oder 3 ist, M ein Metallkation ausgewählt aus der Gruppe bestehend aus Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ und Co³⁺ darstellt, X⁻ ein Anion ist, das ausgewählt wird aus der Gruppe bestehend aus AsF₆⁻, SbF₆⁻, BiF₆⁻ und aus von diesen Anionen abgeleiteten Derivaten, worin ein Fluoratom durch Hydroxylgruppen ersetzt ist, oder worin bis zu 50 % der Anionen X⁻, bezogen auf die Gesamtmenge der Anionen, auch beliebige Anionen sein können, L ein organischer σ-Donorligand ist, der als Ligandenstellen ein oder mehrere funktionelle Reste ausgewählt aus der Gruppe bestehend aus -CO-, -CO-O-, -O-CO-O- oder -O- aufweist, und der über das Sauerstoffatom oder über die Sauerstoffatome mit dem Zentralatom σ-Bindungen ausbildet und x eine ganze Zahl von 0 bis 6 bedeutet, wobei die Liganden L im Rahmen der gegebenen Definitionen unterschiedlich sein können.

2. Zusammensetzungen gemäss Anspruch 1, dadurch gekennzeichnet, dass L ausgewählt wird aus der Gruppe bestehend aus Ethern, Ketonen, Carbonsäureanhydriden und Carbonsäureestern, insbesondere den Lactonen und den Anhydriden von Dicarbonsäuren.

3. Zusammensetzungen gemäss Anspruch 1, dadurch gekennzeichnet, dass Komponente
ii) eine Verbindung der Formel II ist
[(L¹)ₐM⁺ⁿ]ⁿ⁺ n X⁻ (II),
worin M, X und n die in Anspruch 1 definierten Bedeutungen besitzen, L¹ ein ein- bis drei- oder sechszähniger σ-Donorligand ist und eine aliphatische, cycloaliphatische, aromatische oder araliphatische Verbindung mit ein oder zwei Keton-, Anhydrid-, Carbonat- oder Estergruppen oder mit ein bis sechs Ethergruppen pro Molekül bedeutet, wobei die Liganden L¹ einer Verbindung der Formel II im Rahmen der gegebenen Definitionen unterschiedlich sein können und, falls L¹ ein einzähniger Ligand ist, a 6 bedeutet, falls L¹ ein zweizähniger Ligand ist, a 3 bedeutet, falls L¹ ein dreizähniger Ligand ist, a 2 bedeutet und, falls L¹ ein sechszähniger Ligand ist, a 1 bedeutet.

4. Zusammensetzungen gemäss Anspruch 1, dadurch gekennzeichnet, dass Komponente i) ein Polyisocyanat oder ein Anhydrid von Polycarbonsäuren ist.

5. Zusammensetzungen gemäss Anspruch 1, dadurch gekennzeichnet, dass die Menge an Komponente ii) zwischen 0,05 und 10 Gew.%, bezogen auf das Gesamtgewicht von Komponenten i) und ii), beträgt.

6. Zusammensetzungen gemäss Anspruch 3, dadurch gekennzeichnet, dass n 2 ist und a 6 oder 3 bedeutet.

7. Zusammensetzungen gemäss Ansprüchen 1 oder 3, dadurch gekennzeichnet, dass M ausgewählt ist aus der Gruppe bestehend aus Zn²⁺, Mn²⁺, Sn²⁺, Al³⁺ und insbesondere Fe²⁺.

8. Zusammensetzungen gemäss Ansprüchen 1 oder 3, dadurch gekennzeichnet, dass X⁻ AsF₆⁻, SbF₅(OH)⁻, BiF₆⁻ und insbesondere SbF₆⁻ ist.

9. Zusammensetzungen gemäss Anspruch 1, dadurch gekennzeichnet, dass diese unterhalb von 50°C flüssig sind.

10. Verbindungen der Formel II gemäss Anspruch 3.

11. Verbindungen der Formel II gemäss Anspruch 10, dadurch gekennzeichnet, dass a 6 oder 3 ist und L¹ eine aliphatische, cycloaliphatische, aromatische oder araliphatische Verbindung mit einer oder zwei Carbonsäureanhydridgruppen ist.

12. Verfahren zur Herstellung von Zusammensetzungen gemäss Anspruch 1, dadurch gekennzeichnet, dass mindestens eine Verbindung der Formel I gemäss Anspruch 1 in einer Komponente i) gemäss Anspruch 1 gelöst wird.

13. Verfahren zur Herstellung von Verbindungen der Formel II gemäss Anspruch 3, worin M Fe²⁺ist, dadurch gekennzeichnet, dass ein π-Komplex der Formel III
[(R¹)Fe⁺²(R²)]^{+b} b X⁻ (III),
worin R¹ ein π-Aren bedeutet und R² ein Anion eines π-Arens und insbesondere ein π-Aren ist, b 1 oder 2 bedeutet, und X⁻ die in Anspruch 1 definierte Bedeutung aufweist in einem einzuführenden Liganden L¹ mit der in Anspruch 3 definierten Bedeutung, oder in einem Gemisch dieser Verbindungen gelöst und mit aktinischer Strahlung bestrahlt oder erhitzt wird, bis der Ligandenaustausch von R¹ und R² gegen L¹ im wesentlichen stattgefunden hat und anschliessend in an sich bekannter Weise aus dem Reaktionsgemisch abgetrennt wird.

14. Verfahren zur Herstellung von Verbindungen der Formel II gemäss Anspruch 3, dadurch gekennzeichnet, dass ein Metallhalogenid der Formel IV zusammen mit einer etwa stöchiometrischen Menge eines Silbersalzes der Formel V
M⁺ⁿ(Hal)ₙ (IV),
AgX (V),
worin n, M und X die in Anspruch 1 definierte Bedeutung aufweisen und Hal ein Halogenidanion, insbesondere Chlorid oder Fluorid ist, in einem einzuführenden Liganden L¹ mit der in Anspruch 3 definierten Bedeutung, oder in einem Gemisch dieser Verbindungen gelöst oder suspendiert wird und das Produkt der Formel II in an sich bekannter Weise aus der Reaktionsmischung abgetrennt wird.

15. Verfahren zur Herstellung von Verbindungen der Formel II gemäss Anspruch 3, dadurch gekennzeichnet, dass ein Metallsalz der Formel VI mit einer Verbindung der Formel VII
M⁺ⁿ(Y⁻)ₙ (VI), 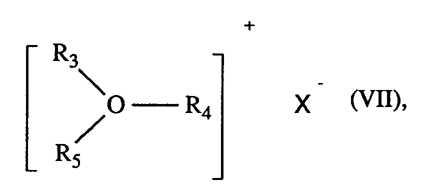
worin R₃, R₄ und R₅ unabhängig voneinander Alkyl, Cycloalkyl oder Aralkyl, insbesondere Methyl oder Ethyl, bedeuten, M, n und X⁻ die in Anspruch 1 definierte Bedeutung besitzen, und Y⁻ ein Halogenidanion, Alkoholatanion oder Carbonsäureanion bedeutet, zusammen mit einer Verbindung L¹ gemäss der in Anspruch 3 gegebenen Definition umgesetzt wird, und das Produkt der Formel II in an sich bekannter Weise aus der Reaktionsmischung abgetrennt wird.

16. Verfahren zur Herstellung von Verbindungen der Formel II gemäss Anspruch 3, worin X⁻ AsF₆⁻, SbF₆⁻ oder BiF₆⁻ bedeutet, dadurch gekennzeichnet, dass eine Verbindung der Formel VIII und eine Lewis-Säure der Formel IX
M⁺ⁿFₙ (VIII),
QF₅ (IX),
worin n und M die in Anspruch 1 definierte Bedeutung aufweisen und Q As, Sb oder Bi bedeutet, entweder in einem Lösungsmittel, das unter den Reaktionsbedingungen inert ist und wenigstens eine der Verbindungen der Formel VIII oder IX zu lösen vermag oder in einem Ueberschuss der Verbindung der Formel IX gelöst umgesetzt werden, das erhaltene Produkt isoliert und in einem einzuführenden Liganden L¹ mit der in Anspruch 3 definierten Bedeutung oder in einem Gemisch dieser Verbindungen gelöst wird, und das Produkt der Formel II in an sich bekannter Weise aus der Reaktionsmischung abgetrennt wird.

17. Verfahren zur Herstellung von Zusammensetzungen gemäss Anspruch 1, worin X⁻ AsF₆⁻, SbF₆⁻ oder BiF₆⁻ bedeutet, dadurch gekennzeichnet, dass eine Verbindung der Formel VIII und eine Lewis-Säure der Formel IX
M⁺ⁿFₙ (VIII),
QF₅ (IX),
worin n und M die in Anspruch 1 definierte Bedeutung aufweisen und Q As, Sb oder Bi bedeutet, entweder in einem Lösungsmittel, das unter den Reaktionsbedingungen inert ist und wenigstens eine der Verbindungen der Formel VIII oder IX zu lösen vermag oder in einem Ueberschuss der Verbindung der Formel IX gelöst umgesetzt werden, das erhaltene Produkt isoliert und entweder direkt in einer Komponente i) gemäss Anspruch 1 gelöst wird oder in einem einzuführenden Liganden L mit der in Anspruch 1 definierten Bedeutung oder in einem Gemisch dieser Verbindungen gelöst und die Reaktionsmischung gegebenenfalls erhitzt wird, so dass der Ligand L in die Verbindung der Formel I eingeführt wird, das Produkt in an sich bekannter Weise isoliert wird und anschliessend in einer Komponente i) gemäss Anspruch 1 gelöst wird.

18. Verfahren zur Herstellung von Zusammensetzungen gemäss Anspruch 17, dadurch gekennzeichnet, dass das Umsetzungsprodukt der Verbindungen VIII und IX nach dessen Isolierung direkt in einem Anhydrid einer Polycarbonsäure, einem Polyisocyanat, einem cyclischen Carbonat, einem Lacton oder einem Gemisch solcher Verbindungen gelöst wird.

19. Verfahren zur Herstellung von Verbindungen der Formel II gemäss Anspruch 3, dadurch gekennzeichnet, dass eine Verbindung der Formel IIa
[(L³)ₐM⁺ⁿ]ⁿ⁺ n X⁻ (IIa),
worin M, X, n und a die in Anspruch 3 definierte Bedeutung besitzen und L³ eine der in Anspruch 3 für L¹ definierte Bedeutung besitzt zusammen mit einer mindestens der Stöchiometrie des gewünschten Endproduktes entsprechenden Menge eines von L³ unterschiedlichen Liganden L¹ gelöst wird, und zur Durchführung des Ligandenaustauschs erhitzt wird.

20. Härtbare Zusammensetzungen enthaltend
a) ein kationisch polymerisierbares organisches Material, und
b) eine Zusammensetzung gemäss Anspruch 1.

21. Zusammensetzungen gemäss Anspruch 20, dadurch gekennzeichnet, dass die Menge an Initiatorkomponente b) 0,05 bis 0,5 Gewichtsteile, vorzugsweise 0,15 - 0,3 Gewichtsteile, bezogen auf einen Gewichtsteil des kationisch polymerisierbaren Materials beträgt.

22. Zusammensetzungen gemäss Anspruch 20 enthaltend als Komponente a) eine Verbindung mit durchschnittlich mindestens zwei 1,2-Epoxidgruppen pro Molekül.

23. Verfahren zur Herstellung von gehärteten Produkten, dadurch gekennzeichnet, dass eine härtbare Zusammensetzung gemäss Anspruch 20 durch Erhitzen gehärtet wird.

## Patentansprüche (Patentansprüche für folgende(n) Vertragsstaat(en): ES)

1. Zusammensetzungen enthaltend
i) ein Anhydrid einer Polycarbonsäure, ein Polyisocyanat, ein cyclisches Carbonat, ein Lacton oder ein Gemisch solcher Verbindungen, und darin gelöst
ii) mindestens eine Verbindung der Formel I
[M⁺ⁿ(L)ₓ]ⁿ⁺ n X⁻ (I),
worin n 2 oder 3 ist, M ein Metallkation ausgewählt aus der Gruppe bestehend aus Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ und Co³⁺ darstellt, X⁻ ein Anion ist, das ausgewählt wird aus der Gruppe bestehend aus AsF₆⁻, SbF₆⁻, BiF₆⁻ und aus von diesen Anionen abgeleiteten Derivaten, worin ein Fluoratom durch Hydroxylgruppen ersetzt ist, oder worin bis zu 50 % der Anionen X⁻, bezogen auf die Gesamtmenge der Anionen, auch beliebige Anionen sein können, L ein organischer σ-Donorligand ist, der als Ligandenstellen ein oder mehrere funktionelle Reste ausgewählt aus der Gruppe bestehend aus -CO-, -CO-O-, -O-CO-O- oder -O- aufweist, und der über das Sauerstoffatom oder über die Sauerstoffatome mit dem Zentralatom σ-Bindungen ausbildet und x eine ganze Zahl von 0 bis 6 bedeutet, wobei die Liganden L im Rahmen der gegebenen Definitionen unterschiedlich sein können.

2. Zusammensetzungen gemäss Anspruch 1, dadurch gekennzeichnet, dass L ausgewählt wird aus der Gruppe bestehend aus Ethern, Ketonen, Carbonsäureanhydriden und Carbonsäureestern, insbesondere den Lactonen und den Anhydriden von Dicarbonsäuren.

3. Zusammensetzungen gemäss Anspruch 1, dadurch gekennzeichnet, dass Komponente
ii) eine Verbindung der Formel II ist
[(L¹)ₐM⁺ⁿ]ⁿ⁺ n X⁻ (II),
worin M, X und n die in Anspruch 1 definierten Bedeutungen besitzen, L¹ ein ein- bis drei- oder sechszähniger σ-Donorligand ist und eine aliphatische, cycloaliphatische, aromatische oder araliphatische Verbindung mit ein oder zwei Keton-, Anhydrid-, Carbonat- oder Estergruppen oder mit ein bis sechs Ethergruppen pro Molekül bedeutet, wobei die Liganden L¹ einer Verbindung der Formel II im Rahmen der gegebenen Definitionen unterschiedlich sein können und, falls L¹ ein einzähniger Ligand ist, a 6 bedeutet, falls L¹ ein zweizähniger Ligand ist, a 3 bedeutet, falls L¹ ein dreizähniger Ligand ist, a 2 bedeutet und, falls L¹ ein sechszähniger Ligand ist, a 1 bedeutet.

4. Zusammensetzungen gemäss Anspruch 1, dadurch gekennzeichnet, dass Komponente i) ein Polyisocyanat oder ein Anhydrid von Polycarbonsäuren ist.

5. Zusammensetzungen gemäss Anspruch 1, dadurch gekennzeichnet, dass die Menge an Komponente ii) zwischen 0,05 und 10 Gew.%, bezogen auf das Gesamtgewicht von Komponenten i) und ii), beträgt.

6. Zusammensetzungen gemäss Anspruch 3, dadurch gekennzeichnet, dass n 2 ist und a 6 oder 3 bedeutet.

7. Zusammensetzungen gemäss Ansprüchen 1 oder 3, dadurch gekennzeichnet, dass M ausgewählt ist aus der Gruppe bestehend aus Zn²⁺, Mn²⁺, Sn²⁺, Al³⁺ und insbesondere Fe²⁺.

8. Zusammensetzungen gemäss Ansprüchen 1 oder 3, dadurch gekennzeichnet, dass X⁻ AsF₆⁻, SbF₅(OH)⁻, BiF₆⁻ und insbesondere SbF₆⁻ ist.

9. Zusammensetzungen gemäss Anspruch 1, dadurch gekennzeichnet, dass diese unterhalb von 50°C flüssig sind.

10. Verfahren zur Herstellung von Zusammensetzungen gemäss Anspruch 1, dadurch gekennzeichnet, dass mindestens eine Verbindung der Formel I gemäss Anspruch 1 in einer Komponente i) gemäss Anspruch 1 gelöst wird.

11. Verfahren zur Herstellung von Verbindungen der Formel II gemäss Anspruch 3, worin M Fe²⁺ ist, dadurch gekennzeichnet, dass ein π-Komplex der Formel III
[(R¹)Fe⁺²(R²)]^{+b} b X⁻ (III),
worin R¹ ein π-Aren bedeutet und R² ein Anion eines π-Arens und insbesondere ein π-Aren ist, b 1 oder 2 bedeutet, und X⁻ die in Anspruch 1 definierte Bedeutung aufweist in einem einzuführenden Liganden L¹ mit der in Anspruch 3 definierten Bedeutung, oder in einem Gemisch dieser Verbindungen gelöst und mit aktinischer Strahlung bestrahlt oder erhitzt wird, bis der Ligandenaustausch von R¹ und R² gegen L¹ im wesentlichen stattgefunden hat und anschliessend in an sich bekannter Weise aus dem Reaktionsgemisch abgetrennt wird.

12. Verfahren zur Herstellung von Verbindungen der Formel II gemäss Anspruch 3, dadurch gekennzeichnet, dass ein Metallhalogenid der Formel IV zusammen mit einer etwa stöchiometrischen Menge eines Silbersalzes der Formel V
M⁺ⁿ(Hal)ₙ (IV),
AgX (V),
worin n, M und X die in Anspruch 1 definierte Bedeutung aufweisen und Hal ein Halogenidanion, insbesondere Chlorid oder Fluorid ist, in einem einzuführenden Liganden L¹ mit der in Anspruch 3 definierten Bedeutung, oder in einem Gemisch dieser Verbindungen gelöst oder suspendiert wird und das Produkt der Formel II in an sich bekannter Weise aus der Reaktionsmischung abgetrennt wird.

13. Verfahren zur Herstellung von Verbindungen der Formel II gemäss Anspruch 3, dadurch gekennzeichnet, dass ein Metallsalz der Formel VI mit einer Verbindung der Formel VII
M⁺ⁿ(Y⁻)ₙ (VI), 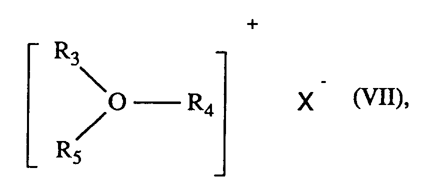
worin R₃, R₄ und R₅ unabhängig voneinander Alkyl, Cycloalkyl oder Aralkyl, insbesondere Methyl oder Ethyl, bedeuten, M, n und X⁻ die in Anspruch 1 definierte Bedeutung besitzen, und Y⁻ ein Halogenidanion, Alkoholatanion oder Carbonsäureanion bedeutet, zusammen mit einer Verbindung L¹ gemäss der in Anspruch 3 gegebenen Definition umgesetzt wird, und das Produkt der Formel II in an sich bekannter Weise aus der Reaktionsmischung abgetrennt wird.

14. Verfahren zur Herstellung von Verbindungen der Formel II gemäss Anspruch 3, worin X⁻ AsF₆⁻, SbF₆⁻ oder BiF₆⁻ bedeutet, dadurch gekennzeichnet, dass eine Verbindung der Formel VIII und eine Lewis-Säure der Formel IX
M⁺ⁿFₙ (VIII),
QF₅ (IX),
worin n und M die in Anspruch 1 definierte Bedeutung aufweisen und Q As, Sb oder Bi bedeutet, entweder in einem Lösungsmittel, das unter den Reaktionsbedingungen inert ist und wenigstens eine der Verbindungen der Formel VIII oder IX zu lösen vermag oder in einem Ueberschuss der Verbindung der Formel IX gelöst umgesetzt werden, das erhaltene Produkt isoliert und in einem einzuführenden Liganden L¹ mit der in Anspruch 3 definierten Bedeutung oder in einem Gemisch dieser Verbindungen gelöst wird, und das Produkt der Formel II in an sich bekannter Weise aus der Reaktionsmischung abgetrennt wird.

15. Verfahren zur Herstellung von Zusammensetzungen gemäss Anspruch 1, worin X⁻ AsF₆⁻, SbF₆⁻ oder BiF₆⁻ bedeutet, dadurch gekennzeichnet, dass eine Verbindung der Formel VIII und eine Lewis-Säure der Formel IX
M⁺ⁿFₙ (VIII),
QF₅ (IX),
worin n und M die in Anspruch 1 definierte Bedeutung aufweisen und Q As, Sb oder Bi bedeutet, entweder in einem Lösungsmittel, das unter den Reaktionsbedingungen inert ist und wenigstens eine der Verbindungen der Formel VIII oder IX zu lösen vermag oder in einem Ueberschuss der Verbindung der Formel IX gelöst umgesetzt werden, das erhaltene Produkt isoliert und entweder direkt in einer Komponente i) gemäss Anspruch 1 gelöst wird oder in einem einzuführenden Liganden L mit der in Anspruch 1 definierten Bedeutung oder in einem Gemisch dieser Verbindungen gelöst und die Reaktionsmischung gegebenenfalls erhitzt wird,so dass der Ligand L in die Verbindung der Formel I eingeführt wird, das Produkt in an sich bekannter Weise isoliert wird und anschliessend in einer Komponente i) gemäss Anspruch 1 gelöst wird.

16. Verfahren zur Herstellung von Zusammensetzungen gemäss Anspruch 15, dadurch gekennzeichnet, dass das Umsetzungsprodukt der Verbindungen VIII und IX nach dessen Isolierung direkt in einem Anhydrid einer Polycarbonsäure, einem Polyisocyanat, einem cyclischen Carbonat, einem Lacton oder einem Gemisch solcher Verbindungen gelöst wird.

17. Verfahren zur Herstellung von Verbindungen der Formel II gemäss Anspruch 3, dadurch gekennzeichnet, dass eine Verbindung der Formel IIa
[(L³)ₐM⁺ⁿ]ⁿ⁺ n X⁻ (IIa),
worin M, X, n und a die in Anspruch 3 definierte Bedeutung besitzen und L³ eine der in Anspruch 3 für L¹ definierte Bedeutung besitzt zusammen mit einer mindestens der Stöchiometrie des gewünschten Endproduktes entsprechenden Menge eines von L³ unterschiedlichen Liganden L¹ gelöst wird, und zur Durchführung des Ligandenaustauschs erhitzt wird.

18. Härtbare Zusammensetzungen enthaltend
a) ein kationisch polymerisierbares organisches Material, und
b) eine Zusammensetzung gemäss Anspruch 1.

19. Zusammensetzungen gemäss Anspruch 18, dadurch gekennzeichnet, dass die Menge an Initiatorkomponente b) 0,05 bis 0,5 Gewichtsteile, vorzugsweise 0,15 - 0,3 Gewichtsteile, bezogen auf einen Gewichtsteil des kationisch polymerisierbaren Materials beträgt.

20. Zusammensetzungen gemäss Anspruch 18 enthaltend als Komponente a) eine Verbindung mit durchschnittlich mindestens zwei 1,2-Epoxidgruppen pro Molekül.

21. Verfahren zur Herstellung von gehärteten Produkten, dadurch gekennzeichnet, dass eine härtbare Zusammensetzung gemäss Anspruch 18 durch Erhitzen gehärtet wird.

## Claims (Claims for the following Contracting State(s): AT, CH, DE, FR, GB, IT, LI, NL, SE)

1. A composition comprising
i) an anhydride of a polycarboxylic acid, a polyisocyanate, a cyclic carbonate, a lactone or a mixture of such compounds, and dissolved therein
ii) at least one compound of the formula I
[M⁺ⁿ(L)ₓ]ⁿ⁺ n X⁻ (I)
in which n is 2 or 3, M is a metal cation selected from the group consisting of Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ and Co³⁺, X⁻ is an anion which is selected from the group consisting of AsF₆⁻, SbF₆⁻, BiF₆⁻ and derivatives derived from these anions in which a fluorine atom is replaced by hydroxyl groups, or in which up to 50 % of the anions X⁻, based on the total amount of anions, can also be any desired anions, L is an organic σ-donor ligand which contains, as ligand sites, one or more functional radicals selected from the group consisting of -CO-, -CO-O-, -O-CO-O- and -O-, and which forms σ-bonds with the central atom via the oxygen atom or via the oxygen atoms, and x is an integer from 0 to 6, it being possible for the ligands L to differ within the context of the definitions given.

2. A composition according to claim 1, in which L is selected from the group consisting of ethers, ketones, carboxylic acid anhydrides and carboxylic acid esters, in particular the lactones and anhydrides of dicarboxylic acids.

3. A composition according to claim 1, in which component ii) is a compound of the formula II
[(L¹)ₐM⁺ⁿ]ⁿ⁺ n X⁻ (II)
in which M, X and n are as defined in claim 1, L¹ is a mono- to tri- or hexadentate σ-donor ligand and is an aliphatic, cycloaliphatic, aromatic or araliphatic compound having one or two ketone, anhydride, carbonate or ester groups or one to six ether groups per molecule, it being possible for the ligands L¹ of a compound of the formula II to differ within the context of the definitions given, and, if L¹ is a monodentate ligand, a is 6, if L¹ is a bidentate ligand, a is 3, if L¹ is a tridentate ligand, a is 2 and, if L¹ is a hexadentate ligand, a is 1.

4. A composition according to claim 1, in which component i) is a polyisocyanate or a polycarboxylic acid anhydride.

5. A composition according to claim 1, in which the amount of component ii) is between 0.05 and 10 % by weight, based on the total weight of components i) and ii).

6. A composition according to claim 3, in which n is 2 and a is 6 or 3.

7. A composition according to either of claims 1 and 3, in which M is selected from the group consisting of Zn²⁺, Mn²⁺, Sn²⁺, Al³⁺ and in particular Fe²⁺.

8. A composition according to either of claims 1 and 3, in which X⁻ is AsF₆⁻, SbF₅(OH)⁻, BiF₆⁻ or in particular SbF₆⁻.

9. A composition according to claim 1, which is liquid below 50°C.

10. A compound of the formula II according to claim 3.

11. A compound of the formula II according to claim 10, in which a is 6 or 3 and L¹ is an aliphatic, cycloaliphatic, aromatic or araliphatic compound having one or two carboxylic acid anhydride groups.

12. A process for the preparation of a composition according to claim 1, which comprises dissolving at least one compound of the formula I according to claim 1 in a component i) according to claim 1.

13. A process for the preparation of a compound of the formula II according to claim 3 in which M is Fe²⁺, which comprises dissolving a π-complex of the formula III
[(R¹)Fe⁺²(R²)]^{+b} bX⁻ (III),
in which R¹ is a π-arene and R² is an anion of a π-arene or in particular a π-arene, b is 1 or 2 and X⁻ is as defined in claim 1, in a ligand L¹ as defined in claim 3, which is to be introduced, or in a mixture of these compounds, irradiating the solution with actinic radiation or heating it until the ligand exchange of R¹ and R² for L¹ has essentially taken place and then separating off the product from the reaction mixture in a manner which is known per se.

14. A process for the preparation of a compound of the formula II according to claim 3, which comprises dissolving or suspending a metal halide of the formula IV, together with an approximately stoichiometric amount of a silver salt of the formula V
M⁺ⁿ(Hal)ₙ (IV),
AgX (V),
wherein n, M and X are as defined in claim 1 and Hal is a halide anion, in particular chloride or fluoride, in a ligand L¹ as defined in claim 3, which is to be introduced, or in a mixture of these compounds and separating off the product of the formula II from the reaction mixture in a manner which is known per se.

15. A process for the preparation of a compound of the formula II according to claim 3, which comprises reacting a metal salt of the formula VI with a compound of the formula VII
M⁺ⁿ(Y⁻)ₙ (VI), 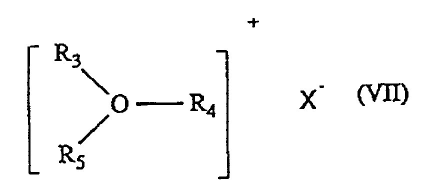
in which R₃, R₄ and R₅ independently of one another are alkyl, cycloalkyl or aralkyl, in particular methyl or ethyl, M, n and X⁻ are as defined in claim 1 and Y⁻ is a halide anion, alcoholate anion or carboxylic acid anion, together with a compound L¹ as defined in claim 3, and separating off the product of the formula II from the reaction mixture in a manner which is known per se.

16. A process for the preparation of a compound of the formula II according to claim 3 in which X⁻ is AsF₆⁻, SbF₆⁻ or BiF₆⁻, which comprises reacting a compound of the formula VIII and a Lewis acid of the formula IX
M⁺ⁿFₙ (VIII),
QF₅ (IX)
in which n and M are as defined in claim 1 and Q is As, Sb or Bi, either in a solvent which is inert under the reaction conditions and is capable of dissolving at least one of the compounds of the formula VIII or IX or as a solution in an excess of the compound of the formula IX, isolating the resulting product and dissolving it in a ligand L¹ as defined in claim 3, which is to be introduced, or in a mixture of these compounds, and separating off the product of the formula II from the reaction mixture in a manner which is known per se.

17. A process for the preparation of a composition according to claim 1 in which X⁻ is AsF₆⁻, SbF₆⁻ or BiF₆⁻, which comprises reacting a compound of the formula VIII and a Lewis acid of the formula IX
M⁺ⁿFₙ (VIII),
QF₅ (IX)
in which n and M are as defined in claim 1 and Q is As, Sb or Bi, either in a solvent which is inert under the reaction conditions and is capable of dissolving at least one of the compounds of the formula VIII or IX or as a solution in an excess of the compound of the formula IX, isolating the resulting product and either dissolving it directly in a component i) according to claim 1 or dissolving it in a ligand L as defined in claim 1, which is to be introduced, or in a mixture of these compounds, if appropriate heating the reaction mixture so that the ligand L is introduced into the compound of the formula I, isolating the product in a manner which is known per se and then dissolving the product in a component i) according to claim 1.

18. A process for the preparation of a composition according to claim 17, wherein the reaction product of the compounds VIII and IX is dissolved directly, after isolation thereof, in an anhydride of a polycarboxylic acid or in a polyisocyanate, a cyclic carbonate, a lactone or a mixture of such compounds.

19. A process for the preparation of a compound of the formula II according to claim 3, which comprises dissolving a compound of the formula IIa
[(L³)ₐM⁺ⁿ]ⁿ⁺ nX⁻ (IIa)
in which M, X, n and a are as defined in claim 3 and L³ is as defined for L¹ in claim 3, together with an amount corresponding at least to the stoichiometry of the desired end product of a ligand L¹ which differs from L³, and heating the solution to carry out the ligand exchange.

20. A curable composition comprising
a) an organic material which can be polymerized cationically and
b) a composition according to claim 1.

21. A composition according to claim 20, in which the amount of initiator component b) is 0.05 to 0.5 part by weight, preferably 0.15 - 0.3 part by weight, per part by weight of the material which can be polymerized cationically.

22. A composition according to claim 20 comprising as component a) a compound having on average at least two 1,2-epoxide groups per molecule.

23. A process for the preparation of a cured product, which comprises curing a curable composition according to claim 20 by heating.

## Claims (Claims for the following Contracting State(s): ES)

1. A composition comprising
i) an anhydride of a polycarboxylic acid, a polyisocyanate, a cyclic carbonate, a lactone or a mixture of such compounds, and dissolved therein
ii) at least one compound of the formula I
[M⁺ⁿ(L)ₓ]ⁿ⁺ n X⁻ (I)
in which n is 2 or 3, M is a metal cation selected from the group consisting of Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ and Co³⁺, X⁻ is an anion which is selected from the group consisting of AsF₆⁻, SbF₆⁻, BiF₆⁻ and derivatives derived from these anions in which a fluorine atom is replaced by hydroxyl groups, or in which up to 50 % of the anions X⁻, based on the total amount of anions, can also be any desired anions, L is an organic σ-donor ligand which contains, as ligand sites, one or more functional radicals selected from the group consisting of -CO-, -CO-O-, -O-CO-O- and -O-, and which forms σ-bonds with the central atom via the oxygen atom or via the oxygen atoms, and x is an integer from 0 to 6, it being possible for the ligands L to differ within the context of the definitions given.

2. A composition according to claim 1, in which L is selected from the group consisting of ethers, ketones, carboxylic acid anhydrides and carboxylic acid esters, in particular the lactones and anhydrides of dicarboxylic acids.

3. A composition according to claim 1, in which component ii) is a compound of the formula II
[(L¹)ₐM⁺ⁿ]ⁿ⁺ n X⁻ (II)
in which M, X and n are as defined in claim 1, L¹ is a mono- to tri- or hexadentate σ-donor ligand and is an aliphatic, cycloaliphatic, aromatic or araliphatic compound having one or two ketone, anhydride, carbonate or ester groups or one to six ether groups per molecule, it being possible for the ligands L¹ of a compound of the formula II to differ within the context of the definitions given, and, if L¹ is a monodentate ligand, a is 6, if L¹ is a bidentate ligand, a is 3, if L¹ is a tridentate ligand, a is 2 and, if L¹ is a hexadentate ligand, a is 1.

4. A composition according to claim 1, in which component i) is a polyisocyanate or a polycarboxylic acid anhydride.

5. A composition according to claim 1, in which the amount of component ii) is between 0.05 and 10 % by weight, based on the total weight of components i) and ii).

6. A composition according to claim 3, in which n is 2 and a is 6 or 3.

7. A composition according to either of claims 1 and 3, in which M is selected from the group consisting of Zn²⁺, Mn²⁺, Sn²⁺, Al³⁺ and in particular Fe²⁺.

8. A composition according to either of claims 1 and 3, in which X⁻ is AsF₆⁻, SbF₅(OH)⁻, BiF₆⁻ or in particular SbF₆⁻.

9. A composition according to claim 1, which is liquid below 50°C.

10. A process for the preparation of a composition according to claim 1, which comprises dissolving at least one compound of the formula I according to claim 1 in a component i) according to claim 1.

11. A process for the preparation of a compound of the formula II according to claim 3 in which M is Fe²⁺, which comprises dissolving a π-complex of the formula III
[(R¹)Fe⁺²(R²)]^{+b} bX⁻ (III),
in which R¹ is a π-arene and R² is an anion of a π-arene or in particular a π-arene, b is 1 or 2 and X⁻ is as defined in claim 1, in a ligand L¹ as defined in claim 3, which is to be introduced, or in a mixture of these compounds, irradiating the solution with actinic radiation or heating it until the ligand exchange of R¹ and R² for L¹ has essentially taken place and then separating off the product from the reaction mixture in a manner which is known per se.

12. A process for the preparation of a compound of the formula II according to claim 3, which comprises dissolving or suspending a metal halide of the formula IV, together with an approximately stoichiometric amount of a silver salt of the formula V
M⁺ⁿ(Hal)ₙ (IV),
AgX (V),
wherein n, M and X are as defined in claim 1 and Hal is a halide anion, in particular chloride or fluoride, in a ligand L¹ as defined in claim 3, which is to be introduced, or in a mixture of these compounds and separating off the product of the formula II from the reaction mixture in a manner which is known per se.

13. A process for the preparation of a compound of the formula II according to claim 3, which comprises reacting a metal salt of the formula VI with a compound of the formula VII
M⁺ⁿ(Y⁻)ₙ (VI), 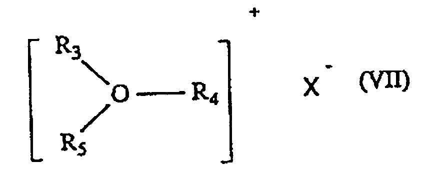
in which R₃, R₄ and R₅ independently of one another are alkyl, cycloalkyl or aralkyl, in particular methyl or ethyl, M, n and X⁻ are as defined in claim 1 and Y⁻ is a halide anion, alcoholate anion or carboxylic acid anion, together with a compound L¹ as defined in claim 3, and separating off the product of the formula II from the reaction mixture in a manner which is known per se.

14. A process for the preparation of a compound of the formula II according to claim 3 in which X⁻ is AsF₆⁻, SbF₆⁻ or BiF₆⁻, which comprises reacting a compound of the formula VIII and a Lewis acid of the formula IX
M⁺ⁿFₙ (VIII),
QF₅ (IX)
in which n and M are as defined in claim 1 and Q is As, Sb or Bi, either in a solvent which is inert under the reaction conditions and is capable of dissolving at least one of the compounds of the formula VIII or IX or as a solution in an excess of the compound of the formula IX, isolating the resulting product and dissolving it in a ligand L¹ as defined in claim 3, which is to be introduced, or in a mixture of these compounds, and separating off the product of the formula II from the reaction mixture in a manner which is known per se.

15. A process for the preparation of a composition according to claim 1 in which X⁻ is AsF₆⁻, SbF₆⁻, or BiF₆⁻, which comprises reacting a compound of the formula VIII and a Lewis acid of the formula IX
M⁺ⁿFₙ (VIII),
QF₅ (IX)
in which n and M are as defined in claim 1 and Q is As, Sb or Bi, either in a solvent which is inert under the reaction conditions and is capable of dissolving at least one of the compounds of the formula VIII or IX or as a solution in an excess of the compound of the formula IX, isolating the resulting product and either dissolving it directly in a component i) according to claim 1 or dissolving it in a ligand L as defined in claim 1, which is to be introduced, or in a mixture of these compounds, if appropriate heating the reaction mixture so that the ligand L is introduced into the compound of the formula I, isolating the product in a manner which is known per se and then dissolving the product in a component i) according to claim 1.

16. A process for the preparation of a composition according to claim 15, wherein the reaction product of the compounds VIII and IX is dissolved directly, after isolation thereof, in an anhydride of a polycarboxylic acid or in a polyisocyanate, a cyclic carbonate, a lactone or a mixture of such compounds.

17. A process for the preparation of a compound of the formula II according to claim 3, which comprises dissolving a compound of the formula IIa
[(L³)ₐM⁺ⁿ]ⁿ⁺ nX⁻ (IIa)
in which M, X, n and a are as defined in claim 3 and L³ is as defined for L¹ in claim 3, together with an amount corresponding at least to the stoichiometry of the desired end product of a ligand L¹ which differs from L³, and heating the solution to carry out the ligand exchange.

18. A curable composition comprising
a) an organic material which can be polymerized cationically and
b) a composition according to claim 1.

19. A composition according to claim 18, in which the amount of initiator component b) is 0.05 to 0.5 part by weight, preferably 0.15 - 0.3 part by weight, per part by weight of the material which can be polymerized cationically.

20. A composition according to claim 18 comprising as component a) a compound having on average at least two 1,2-epoxide groups per molecule.

21. A process for the preparation of a cured product, which comprises curing a curable composition according to claim 18 by heating.

## Revendications (Revendications pour l'(les) Etat(s) contractant(s) suivant(s): AT, CH, DE, FR, GB, IT, LI, NL, SE)

1. Compositions contenant
i) un anhydride d'un acide polycarboxylique, un polyisocyanate, un carbonate cyclique, une lactone ou un mélange de ces composés, et, en solution dans ce constituant,
ii) au moins un composé de formule I
[M⁺ⁿ(L)ₓ]ⁿ⁺ nX⁻ (I)
dans laquelle n est 2 ou 3, M est un cation métallique choisi dans le coupe constitué par Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ et Co³⁺, X⁻ est un anion choisi dans le groupe constitué par AsF₆⁻, SbF₆⁻, BiF₆⁻ et les dérivés de ces anions dans lesquels un atome de fluor est remplacé par un groupe hydroxyle ou dans lesquels jusqu'a 50 % de l'ensemble des anions X⁻ peuvent aussi être des anions quelconques, L est un ligand organique donneur de type σ qui présente comme sites liants un ou plusieurs restes fonctionnels choisis dans le groupe constitué par -CO-, -CO-O-, -O-CO-O- ou -O- et qui forme avec l'atome central des liaisons σ par l'intermédiaire de l'atome d'oxygène ou des atomes d'oxygène, et x est un nombre entier de 0 à 6, les ligands L pouvant être différents dans le cadre des définitions données.

2. Compositions selon la revendication 1, caractérisées en ce que L est choisi dans le groupe constitué par des éthers, des cétones, des anhydrides d'acides carboxyliques et des esters d'acides carboxyliques, en particulier les lactones et les anhydrides d'acides dicarboxyliques.

3. Compositions selon la revendication 1, caractérisées en ce que le constituant ii) est un composé de formule II
[(L¹)ₐM⁺ⁿ]ⁿ⁺ nX⁻ (II)
dans laquelle M, X et n ont la signification définie dans la revendication 1, L¹ représente un ligand donneur de type σ mono- à tridenté ou hexadenté et est un composé aliphatique, cycloaliphatique, aromatique ou araliphatique contenant un ou deux groupes cétone, anhydride, carbonate ou ester ou un à six groupes éther par molécule, les ligands L¹ d'un composé de formule II pouvant être différents dans le cadre des définitions données et, si L¹ est un ligand monodenté, a est égal à 6, si L¹ est un ligand bidenté, a est égal à 3, si L¹ est un ligand tridenté, a est égal à 2 et si L¹ est un ligand hexadenté, a est égal à 1.

4. Compositions selon la revendication 1, caractérisées en ce que le constituant i) est un polyisocyanate ou un anhydride d'acides polycarboxyliques.

5. Compositions selon la revendication 1, caractérisées en ce que la quantité de constituant ii) est comprise entre 0,05 et 10 % en masse par rapport à la masse totale des constituants i) et ii).

6. Compositions selon la revendication 3, caractérisées en ce que n est 2 et a est 6 ou 3.

7. Compositions selon les revendications 1 ou 3, caractérisées en ce que M est choisi dans le groupe constitué par Zn²⁺, Mn²⁺, Sn²⁺, Al³⁺ et en particulier Fe²⁺.

8. Compositions selon les revendications 1 ou 3, caractérisées en ce que X⁻ est AsF₆⁻, SbF₅(OH)⁻, BiF₆⁻ et en particulier SbF₆⁻.

9. Compositions selon la revendication 1, caractérisées en ce qu'elles sont liquides à une température inférieure à 50°C.

10. Composés de formule II selon la revendication 3.

11. Composés de formule II selon la revendication 10, caractérisés en ce que a est 6 ou 3 et L¹ est un composé aliphatique, cycloaliphatique, aromatique ou araliphatique contenant un ou deux groupes anhydride d'acide carboxylique.

12. Procédé de préparation de compositions selon la revendication 1, caractérisé en ce que l'on dissout au moins un composé de formule I selon la revendication 1 dans un constituant i) selon la revendication 1.

13. Procédé de préparation de composés de formule II selon la revendication 3 dans lesquels M est Fe²⁺, caractérisé en ce que l'on dissout un complexe π de formule III
[(R¹)Fe²⁺(R²)]^{+b} bX⁻ (III)
dans laquelle R¹ représente un arène π et R² représente un anion d'un arène π et en particulier un arène π, b est 1 ou 2, et X⁻ a la signification définie dans la revendication 1, dans un ligand L¹ à introduire ayant la signification définie dans la revendication 3, ou dans un mélange de ces composés, et on expose le mélange à un rayonnement actinique ou on le chauffe jusqu'à ce que l'échange des ligands R¹ et R² contre L¹ se soit essentiellement produit, puis on sépare de façon connue en soi le produit du mélange réactionnel.

14. Procédé de préparation de composés de formule II selon la revendication 3, caractérisé en ce que l'on dissout ou on met en suspension un halogénure métallique de formule IV et une quantité à peu près stoechiométrique d'un sel d'argent de formule V
M⁺ⁿ(Hal)ₙ (IV),
AgX (V), (V),
dans lesquels n, M et X ont la signification définie dans la revendication 1 et Hal est un anion halogénure, en particulier un chlorure ou un fluorure, dans un ligand L¹ à introduire ayant la signification définie dans la revendication 3, ou dans un mélange de ces composés, et on sépare de façon connue en soi le produit de formule II du mélange réactionnel.

15. Procédé de préparation de composés de formule II selon la revendication 3, caractérisé en ce que l'on fait réagir ensemble un sel métallique de formule VI et un composé de formule VII
M⁺ⁿ(Y⁻)ₙ (VI) 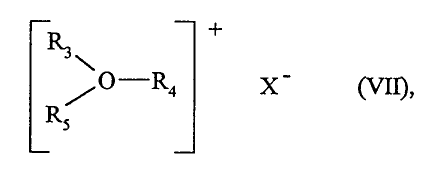
où R₃, R₄ et R₅ représentent indépendamment les uns des autres un reste alkyle, cycloalkyle ou aralkyle, en particulier méthyle ou éthyle, M, n et X⁻ ont la signification définie dans la revendication 1, et Y⁻ représente un anion halogénure, un anion alkylate ou un anion d'acide carboxylique, avec un composé L¹ correspondant à la définition donnée dans la revendication 3, et on sépare de façon connue en soi le produit de formule II du mélange réactionnel.

16. Procédé de préparation de composés de formule II selon la revendication 3 dans lesquels X⁻ est AsF₆⁻, SbF₆⁻, ou BiF₆⁻, caractérisé en ce que l'on fait réagir un composé de formule VIII avec un acide de Lewis de formule IX
M⁺ⁿFₙ (VIII)
QF₅ (IX)
où n et M ont la signification définie dans la revendication 1 et Q est As, Sb ou Bi, soit dans un solvant qui est inerte dans les conditions de la réaction et qui permet de dissoudre au moins l'un des composés de formule VIII ou IX, soit en solution dans un excès du composé de formule IX, on isole le produit obtenu et on le dissout dans un ligand L¹ à introduire ayant la signification définie dans la revendication 3 ou dans un mélange de ces composés, et on sépare de façon connue en soi le produit de formule II du mélange réactionnel.

17. Procédé de préparation de compositions selon la revendication 1 dans lesquelles X⁻ est AsF₆⁻, SbF₆⁻ ou BiF₆⁻, caractérisé en ce que l'on fait réagir un composé de formule VIII avec un acide de Lewis de formule IX
M⁺ⁿFₙ (VIII)
QF₅ (IX)
où n et M ont la signification définie dans la revendication 1 et Q est As, Sb ou Bi, soit dans un solvant qui est inerte dans les conditions de la réaction et qui permet de dissoudre au moins l'un des composés de formule VIII ou IX, soit en solution dans un excès du composé de formule IX, on isole le produit obtenu et, soit on le dissout directement dans un constituant i) selon la revendication 1, soit on le dissout dans un ligand L à introduire ayant la signification définie dans la revendication 1 ou dans un mélange de ces composés et on chauffe éventuellement le mélange réactionnel de façon que le ligand L soit introduit dans le composé de formule I, on isole le produit de façon connue en soi, puis on le dissout dans un constituant i) selon la revendication 1.

18. Procédé de préparation de compositions selon la revendication 17, caractérisé en ce que l'on dissout directement le produit de la réaction des composés VIII et IX, après l'avoir isolé, dans un anhydride d'un acide polycarboxylique, un polyisocyanate, un carbonate cyclique, une lactone ou un mélange de tels composés.

19. Procédé de préparation de composés de formule II selon la revendication 3, caractérisé en ce que l'on dissout un composé de formule IIa
[(L³)ₐM⁺ⁿ]ⁿ⁺ nX⁻ (IIa)
dans laquelle M, X, n et a ont la signification définie dans la revendication 3 et L³ a l'une des significations définies pour L¹ dans la revendication 3, avec une quantité correspondant au moins à la stoechiométrie du produit final désiré d'un ligand L¹ différent de L³, et on chauffe pour effectuer l'échange de ligands.

20. Compositions durcissables contenant
a) une matière organique polymérisable par voie cationique, et
b) une composition selon la revendication 1.

21. Compositions selon la revendication 20, caractérisées en ce que la quantité de constituant amorceur b) est comprise entre 0,05 et 0,5 partie en masse, de préférence entre 0,15 et 0,3 partie en masse pour une partie en masse de la matière polymérisable par voie cationique.

22. Compositions selon la revendication 20 contenant comme constituant a) un composé ayant en moyenne au moins deux groupes 1,2-époxy par molécule.

23. Procédé de fabrication de produits durcis, caractérisé en ce que l'on durcit par chauffage une composition durcissable selon la revendication 20.

## Revendications (Revendications pour l'(les) Etat(s) contractant(s) suivant(s): ES)

1. Compositions contenant
i) un anhydride d'un acide polycarboxylique, un polyisocyanate, un carbonate cyclique, une lactone ou un mélange de ces composés, et, en solution dans ce constituant,
ii) au moins un composé de formule I
[M⁺ⁿ(L)ₓ]ⁿ⁺ nX⁻ (I)
dans laquelle n est 2 ou 3, M est un cation métallique choisi dans le groupe constitué par Zn²⁺, Mg²⁺, Fe²⁺, Co²⁺, Ni²⁺, Cr²⁺, Ru²⁺, Mn²⁺, Sn²⁺, VO²⁺, Fe³⁺, Al³⁺ et Co³⁺, X⁻ est un anion choisi dans le groupe constitué par AsF₆⁻, SbF₆⁻, BiF₆⁻ et les dérivés de ces anions dans lesquels un atome de fluor est remplacé par un groupe hydroxyle ou dans lesquels jusqu'à 50 % de l'ensemble des anions X⁻ peuvent aussi être des anions quelconques, L est un ligand organique donneur de type σ qui présente comme sites liants un ou plusieurs restes fonctionnels choisis dans le groupe constitué par -CO-, -CO-O-, -O-CO-O- ou -O- et qui forme avec l'atome central des liaisons σ par l'intermédiaire de l'atome d'oxygène ou des atomes d'oxygène, et x est un nombre entier de 0 à 6, les ligands L pouvant être différents dans le cadre des définitions données.

2. Compositions selon la revendication 1, caractérisées en ce que L est choisi dans le groupe constitué par des éthers, des cétones, des anhydrides d'acides carboxyliques et des esters d'acides carboxyliques, en particulier les lactones et les anhydrides d'acides dicarboxyliques.

3. Compositions selon la revendication 1, caractérisées en ce que le constituant ii) est un composé de formule II
[(L¹)ₐM⁺ⁿ]ⁿ⁺ nX⁻ (II)
dans laquelle M, X et n ont la signification définie dans la revendication 1, L¹ représente un ligand donneur de type σ mono- à tridenté ou hexadenté et est un composé aliphatique, cycloaliphatique, aromatique ou araliphatique contenant un ou deux groupes cétone, anhydride, carbonate ou ester ou un à six groupes éther par molécule, les ligands L¹ d'un composé de formule II pouvant être différents dans le cadre des définitions données et, si L¹ est un ligand monodenté, a est égal à 6, si L¹ est un ligand bidenté, a est égal à 3, si L¹ est un ligand tridenté, a est égal à 2 et si L¹ est un ligand hexadenté, a est égal à 1.

4. Compositions selon la revendication 1, caractérisées en ce que le constituant i) est un polyisocyanate ou un anhydride d'acides polycarboxyliques.

5. Compositions selon la revendication 1, caractérisées en ce que la quantité de constituant ii) est comprise entre 0,05 et 10 % en masse par rapport à la masse totale des constituants i) et ii).

6. Compositions selon la revendication 3, caractérisées en ce que n est 2 et a est 6 ou 3.

7. Compositions selon les revendications 1 ou 3, caractérisées en ce que M est choisi dans le groupe constitué par Zn²⁺, Mn²⁺, Sn²⁺, Al³⁺ et en particulier Fe²⁺.

8. Compositions selon les revendications 1 ou 3, caractérisées en ce que X⁻ est AsF₆⁻, SbF₅(OH)⁻, BiF₆⁻ et en particulier SbF₆⁻.

9. Compositions selon la revendication 1, caractérisées en ce qu'elles sont liquides à une température inférieure à 50°C.

10. Procédé de préparation de compositions selon la revendication 1, caractérisé en ce que l'on dissout au moins un composé de formule I selon la revendication 1 dans un constituant i) selon la revendication 1.

11. Procédé de préparation de composés de formule II selon la revendication 3 dans lesquels M est Fe²⁺, caractérisé en ce que l'on dissout un complexe π de formule III
[(R¹)Fe²⁺(R²)]^{+b} bX⁻ (III)
dans laquelle R¹ représente un arène π et R² représente un anion d'un arène π et en particulier un arène π, b est 1 ou 2, et X⁻ a la signification définie dans la revendication 1, dans un ligand L¹ à introduire ayant la signification définie dans la revendication 3, ou dans un mélange de ces composés, et on expose le mélange à un rayonnement actinique ou on le chauffe jusqu'à ce que l'échange des ligands R¹ et R² contre L¹ se soit essentiellement produit, puis on sépare de façon connue en soi le produit du mélange réactionnel.

12. Procédé de préparation de composés de formule II selon la revendication 3, caractérisé en ce que l'on dissout ou on met en suspension un halogénure métallique de formule IV et une quantité à peu près stoechiométrique d'un sel d'argent de formule V
M⁺ⁿ(Hal)ₙ (IV),
AgX (V),
dans lesquels n, M et X ont la signification définie dans la revendication 1 et Hal est un anion halogénure, en particulier un chlorure ou un fluorure, dans un ligand L¹ à introduire ayant la signification définie dans la revendication 3, ou dans un mélange de ces composés, et on sépare de façon connue en soi le produit de formule II du mélange réactionnel.

13. Procédé de préparation de composés de formule II selon la revendication 3, caractérisé en ce que l'on fait réagir ensemble un sel métallique de formule VI et un composé de formule VII
M⁺ⁿ(Y⁻)ₙ (VI) 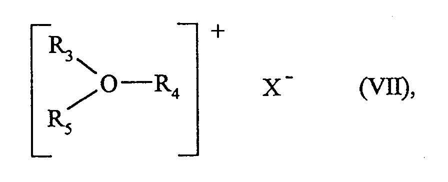
où R₃, R₄ et R₅ représentent indépendamment les uns des autres un reste alkyle, cycloalkyle ou aralkyle, en particulier méthyle ou éthyle, M, n et X⁻ ont la signification définie dans la revendication 1, et Y⁻ représente un anion halogénure, un anion alkylate ou un anion d'acide carboxylique, avec un composé L¹ correspondant à la définition donnée dans la revendication 3, et on sépare de façon connue en soi le produit de formule II du mélange réactionnel.

14. Procédé de préparation de composés de formule II selon la revendication 3 dans lesquels X⁻ est AsF₆⁻, SbF₆⁻ ou BiF₆⁻, caractérisé en ce que l'on fait réagir un composé de formule VIII avec un acide de Lewis de formule IX
M⁺ⁿFₙ (VIII)
QF₅ (IX)
où n et M ont la signification définie dans la revendication 1 et Q est As, Sb ou Bi, soit dans un solvant qui est inerte dans les conditions de la réaction et qui permet de dissoudre au moins l'un des composés de formule VIII ou IX, soit en solution dans un excès du composé de formule IX, on isole le produit obtenu et on le dissout dans un ligand L¹ à introduire ayant la signification définie dans la revendication 3 ou dans un mélange de ces composés, et on sépare de façon connue en soi le produit de formule II du mélange réactionnel.

15. Procédé de préparation de compositions selon la revendication 1 dans lesquelles X⁻ est AsF₆⁻, SbF₆⁻ ou BiF₆⁻, caractérisé en ce que l'on fait réagir un composé de formule VIII avec un acide de Lewis de formule IX
M⁺ⁿFₙ (VIII)
QF₅ (IX)
où n et M ont la signification définie dans la revendication 1 et Q est As, Sb ou Bi, soit dans un solvant qui est inerte dans les conditions de la réaction et qui permet de dissoudre au moins l'un des composés de formule VIII ou IX, soit en solution dans un excès du composé de formule IX, on isole le produit obtenu et, soit on le dissout directement dans un constituant i) selon la revendication 1, soit on le dissout dans un ligand L à introduire ayant la signification définie dans la revendication 1 ou dans un mélange de ces composés et on chauffe éventuellement le mélange réactionnel de façon que le ligand L soit introduit dans le composé de formule I, on isole le produit de façon connue en soi, puis on le dissout dans un constituant i) selon la revendication 1.

16. Procédé de préparation de compositions selon la revendication 15, caractérisé en ce que l'on dissout directement le produit de la réaction des composés VIII et IX, après l'avoir isolé, dans un anhydride d'un acide polycarboxylique, un polyisocyanate, un carbonate cyclique, une lactone ou un mélange de tels composés.

17. Procédé de préparation de composés de formule II selon la revendication 3, caractérisé en ce que l'on dissout un composé de formule IIa
[(L³)ₐM⁺ⁿ]ⁿ⁺ nX⁻ (IIa) (I)
dans laquelle M, X, n et a ont la signification définie dans la revendication 3 et L³ a l'une des significations définies pour L¹ dans la revendication 3, avec une quantité correspondant au moins à la stoechiométrie du produit final désiré d'un ligand L¹ différent de L³, et on chauffe pour effectuer l'échange de ligands.

18. Compositions durcissables contenant
a) une matière organique polymérisable par voie cationique, et
b) une composition selon la revendication 1.

19. Compositions selon la revendication 18, caractérisées en ce que la quantité de constituant amorceur b) est comprise entre 0,05 et 0,5 partie en masse, de préférence entre 0,15 et 0,3 partie en masse pour une partie en masse de la matière polymérisable par voie cationique.

20. Compositions selon la revendication 18 contenant comme constituant a) un composé ayant en moyenne au moins deux groupes 1,2-époxy par molécule.

21. Procédé de fabrication de produits durcis, caractérisé en ce que l'on durcit par chauffage une composition durcissable selon la revendication 18.
